# EUROPEAN PATENT APPLICATION

(11) **EP 4 414 166 A1**
(43) Date of publication of application: **14.08.2024**
(21) Application number: 22878245.4
(22) Date of filing: 02.09.2022
(51) Int. Cl.: B32B 9/00, B32B 27/32, B65D 65/40, B32B 7/12

(54) **LAMINATE, PACKAGE, AND PACKAGED ARTICLE**

(30) Priority: 06.10.2021 JP 2021164766; 11.10.2021 JP 2021166810; 11.10.2021 JP 2021166811
(71) Applicant: Toppan Holdings Inc., Tokyo 110-0016 (JP)
(72) Inventor: TAKEI, Ryo, Tokyo 110-0016 (JP); YAMADA, Mikinori, Tokyo 110-0016 (JP); MIKI, Yuji, Tokyo 110-0016 (JP); TANAKA, Ryota, Tokyo 110-0016 (JP); KAWASAKI, Kentaro, Tokyo 110-0016 (JP)
(74) Representative: TBK
(86) International application number: PCT/JP2022/033187
(87) International publication number: WO 2023/058374

(57) **Abstract**

A laminate mainly made of polyethylene and excellent in heat resistance is provided. A laminate (10A1) includes a substrate layer (1), an adhesive agent layer (3), and a sealant layer (2) in this order, the substrate layer (1) and the sealant layer (2) include polyethylene, and the substrate layer (1) has a probe descendent temperature of 180°C or higher.

## Description

### FIELD

The present invention relates to a laminate, a package, and a packaged article.

### BACKGROUND

A packaging material used for a package such as a packaging bag is required to have various properties depending on the application. Characteristics required for the packaging material are, for example, strength required for the package, bag forming suitability, printability, transport suitability, and content storage stability. In order to satisfy these requirements, it has been common to use a packaging material obtained by combining a plurality of types of synthetic resin films having different characteristics.

For example, Patent Literature 1 describes a packaging material in which a resin film made of polyethylene is bonded to a resin film made of polyester, polyamide, or the like.

Patent Literature 2 describes a multilayer film in which a gas barrier layer formed by applying a dispersion liquid containing an inorganic layered compound and a water-soluble polymer onto at least one surface of a substrate layer composed of a thermoplastic resin, an overcoat layer containing a cationic resin and a resin having a hydroxyl group, an adhesive agent layer, and a sealant layer are sequentially stacked. This literature describes a specific example in which a nylon film is used as a substrate layer and a linear low-density polyethylene film is used as a sealant layer.

In recent years, with growing demand for the construction of a recycling-oriented society, packaging materials having high recyclability are needed. However, as described above, conventional packaging materials are composed of different types of resin materials. It is difficult to separate these resin materials from each other.

Further, in general, high recyclability is expected when the ratio of the main resin contained in the packaging material is 90 mass% or more. As described above, many conventional packaging materials includes a plurality of kinds of resin materials and do not satisfy the above criteria.

Therefore, most of the packaging materials are not recycled at present.

Patent Literature 3 describes a laminate in which a stretched film made of polyethylene is used as a substrate, an adhesive layer and a heat seal layer made of polyethylene are provided thereon, and a vapor deposition layer is provided at least one of between the substrate and the adhesive layer and between the heat seal layer and the adhesive layer. This literature describes that this laminate has sufficient strength, heat resistance, and barrier properties for use as a packaging material, and is also excellent in recyclability.

### CITATION LIST

### PATENT LITERATURE

Patent Literature 1: Jpn. Pat. Appln. KOKAI Publication No. 2009-202519
Patent Literature 2: Jpn. Pat. Appln. KOKAI Publication No. 2009-241359
Patent Literature 3: Jpn. Pat. Appln. KOKAI Publication No. 2020-055157

### SUMMARY

An object of the present invention is to provide a laminate mainly made of polyethylene and excellent in heat resistance.

According to one aspect of the present invention, there is provided a laminate comprising a substrate layer, an adhesive agent layer, and a sealant layer in this order, the substrate layer and the sealant layer comprising polyethylene, and the substrate layer having a probe descendent temperature of 180°C or higher.

According to another aspect of the present invention, there is provided the laminate according to the above aspect, wherein the probe descendent temperature of the substrate layer is 220°C or lower.

According to still another aspect of the present invention, there is provided the laminate according any one of the above aspects, further comprising an intermediate layer placed between the substrate layer and the sealant layer and comprising polyethylene.

According to still another aspect of the present invention, there is provided the laminate according to the above aspect, wherein the intermediate layer has a probe descendent temperature of 180°C or lower.

Alternatively, according to still another aspect of the present invention, there is provided the laminate according to the above aspect, wherein the probe descendent temperature of the intermediate layer is 140°C or higher.

Alternatively, according to still another aspect of the present invention, there is provided the laminate according to the above aspect, wherein the intermediate layer has a probe descendent temperature of 180°C or higher.

According to still another aspect of the present invention, there is provided the laminate according to the above aspect, wherein the probe descendent temperature of the intermediate layer is 220°C or lower.

According to still another aspect of the present invention, there is provided the laminate according to any one of the above aspects, further comprising a protective layer as an outermost layer, the protective layer facing the sealant layer with the substrate layer placed between the protective layer and the sealant layer.

According to still another aspect of the present invention, there is provided the laminate according to the above aspect, wherein the protective layer is made from a thermosetting resin.

According to still another aspect of the present invention, there is provided the laminate according to any one of the above aspects, wherein the substrate layer is a biaxially stretched film.

Alternatively, according to still another aspect of the present invention, there is provided the laminate according to any one of the above aspects, wherein the substrate layer is an uniaxially stretched film.

According to still another aspect of the present invention, there is provided the laminate according to any one of the above aspects, further comprising a gas barrier layer placed between the substrate layer and the sealant layer.

According to still another aspect of the present invention, there is provided the laminate according to any one of the above aspects, wherein the adhesive agent layer has a gas barrier property.

According to still another aspect of the present invention, there is provided the laminate according to any one of the above aspects, wherein the sealant layer is white.

According to still another aspect of the present invention, there is provided the laminate according to any one of the above aspects, wherein the laminate has a polyethylene content of 90 mass% or more.

According to still another aspect of the present invention, there is provided a package comprising the laminate according to any one of the above aspects.

According to still another aspect of the present invention, there is provided the package according to the above aspect, the package being a standing pouch.

According to still another aspect of the present invention, there is provided a packaged article comprising the package according to the above aspects and a content contained in the package.

According to the present invention, a laminate mainly composed of polyethylene and excellent in heat resistance is provided.

### BRIEF DESCRIPTION OF THE DRAWINGS

FIG. 1 is a cross-sectional view schematically illustrating a laminate according to a first embodiment of the present invention.
FIG. 2 is a cross-sectional view schematically illustrating a modification of the laminate illustrated in FIG. 1.
FIG. 3 is a cross-sectional view schematically illustrating a laminate according to the second embodiment of the present invention.
FIG. 4 is a cross-sectional view schematically illustrating a modification of the laminate illustrated in FIG. 3.
FIG. 5 is a cross-sectional view schematically illustrating a laminate according to a third embodiment of the present invention.
FIG. 6 is a cross-sectional view schematically illustrating a first modification of the laminate illustrated in FIG. 5.
FIG. 7 is a cross-sectional view schematically illustrating a second modification of the laminate illustrated in FIG. 5.
FIG. 8 is a cross-sectional view schematically illustrating a laminate according to a fourth embodiment of the present invention.
FIG. 9 is a cross-sectional view schematically illustrating a laminate according to a fifth embodiment of the present invention.
FIG. 10 is a cross-sectional view schematically illustrating a first modification of the laminate illustrated in FIG. 9.
FIG. 11 is a cross-sectional view schematically illustrating a second modification of the laminate illustrated in FIG. 9.
FIG. 12 is a cross-sectional view schematically illustrating a laminate according to a sixth embodiment of the present invention.
FIG. 13 is a view schematically illustrating a packaged article according to a seventh embodiment of the present invention.
FIG. 14 is a view schematically illustrating a packaged article according to an eighth embodiment of the present invention.
FIG. 15 is a view schematically illustrating a packaged article according to the ninth embodiment of the present invention.

### DETAILED DESCRIPTION

Hereinafter, embodiments according to the present invention will be described with reference to the drawings. In the embodiments described below, any one of the above aspects is further embodied. The matters described below can be incorporated into each of the aspects alone or in combination of two or more thereof.

In addition, the following embodiments exemplify configuration for embodying the technical idea of the present invention, and the technical idea of the present invention is not limited by the material, shape, structure, and the like of the following constituent members. Various modifications can be made to the technical idea of the present invention within the technical scope defined by the claims described in CLAIMS.

Note that elements having the same or similar functions are denoted by the same reference numerals in the drawings to be referred to below, and redundant description will be omitted. Therefore, the matters mentioned in one embodiment can also be applied to other embodiments unless otherwise specified. In addition, the drawings are schematic, and a relationship between a dimension in a certain direction and a dimension in another direction, a relationship between a dimension of a certain member and a dimension of another member, and the like may be different from actual ones.

### <1> First embodiment

### <1.1> Laminate

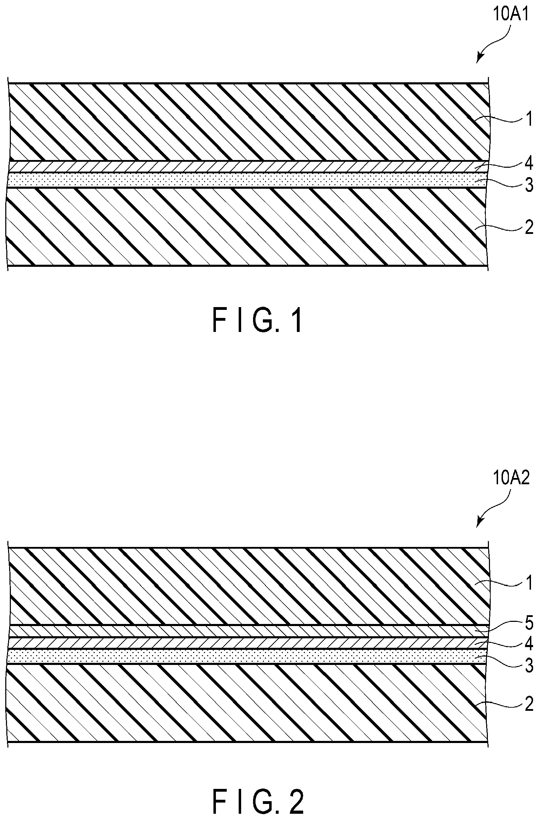

FIG. 1 is a cross-sectional view schematically illustrating a laminate according to a first embodiment of the present invention.

A laminate 10A1 illustrated in FIG. 1 includes a substrate layer 1, a printed layer 4, an adhesive agent layer 3 and a sealant layer 2 in this order.

The ratio of polyethylene in the laminate 10A1 is 90 mass% or more. Here, the ratio of polyethylene in the laminate means the ratio of the total amount of polyethylene to the total amount of resin materials in each layer constituting the laminate. When the ratio of polyethylene is 90 mass% or more, high recyclability can be achieved.

### <1.2> Substrate layer

The substrate layer 1 contains polyethylene. Preferably, the substrate layer 1 is made of polyethylene. The probe descendent temperature of the substrate layer 1 is 180°C or higher. The upper limit of the probe descendent temperature of the substrate layer 1 is not particularly limited. However, the probe descendent temperature of the substrate layer 1 is preferably 250°C or lower, more preferably 220°C or lower.

As described above, the substrate layer 1 has a high probe descendent temperature. A high probe descendent temperature means that the substrate is excellent in heat resistance. Having excellent heat resistance suggests that a regular sequence of molecular chains constituting the substrate layer is formed. Examples of the formation of this regular arrangement include formation of crystals (spherulites) as a primary structure and orientated crystallization as a secondary structure formation. In particular, in the formation of the secondary structure represented by the latter orientated crystallization, improvement in impact resistance and puncture resistance can be expected from the regularity of the molecular arrangement in addition to improvement in heat resistance.

Note that the probe descendent temperature can be adjusted by stretching conditions such as the stretch rate of the substrate layer; the density of the resin to be used; the type of comonomer; molecular weight; molecular weight distribution; film production conditions such as thermal history; and a film forming method.

The polyethylene contained in the substrate layer 1 may be a homopolymer of ethylene or a copolymer of ethylene and another monomer. In a case where the polyethylene is a copolymer of ethylene and another monomer, the ratio of ethylene in the copolymer is, for example, 80 mol% or more.

The another monomer is, for example, an α-olefin. According to one example, the α-olefin has carbon atoms in a range of 3 to 20. Such an α-olefin is, for example, propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene.

The polyethylene may be a copolymer of ethylene and one of vinyl acetate and an acrylic acid ester.

The substrate layer 1 is, for example, high-density polyethylene (HDPE), medium-density polyethylene (MDPE), low-density polyethylene (LDPE), linear low-density polyethylene (LLDPE), or very-low-density polyethylene (VLDPE) .

Here, the density of the high-density polyethylene is 0.942 g/cm³ or more, the density of the medium-density polyethylene is 0.930 g/cm³ or more and less than 0.942 g/cm³, the density of the low-density polyethylene is 0.910 g/cm³ or more and less than 0.930 g/cm³, the density of the linear low-density polyethylene is 0.910 g/cm³ or more and less than 0.930 cm³, and the density of the very-low-density polyethylene is less than 0.910 g/cm³.

Note that the density is a value obtained by a method in accordance with JIS K7112: 1999.

The polyethylene contained in the substrate layer 1 may be biomass-derived polyethylene. As the biomass-derived polyethylene, for example, green polyethylene (manufactured by Braskem S.A.) can be used.

Alternatively, the polyethylene contained in the substrate layer 1 may be polyethylene recycled by mechanical recycling. Here, the mechanical recycling is to perform decontamination of the polyethylene film by pulverizing the collected polyethylene film and the like, then subjecting the pulverized film to alkaline cleaning to remove stains and foreign matters on the film surface, and then drying the film at a high temperature and under a reduced pressure to diffuse contaminants remaining inside the film.

Alternatively, the polyethylene contained in the substrate layer 1 may be polyethylene recycled by chemical recycling.

The melting point of the substrate layer 1 is preferably in the range of 100°C to 140°C, and more preferably in the range of 120°C to 140°C. Note that the melting point is a value obtained by a method in accordance with JIS K7121-1987.

Here, the probe descendent temperature of the substrate layer 1 is a value obtained by a measurement method to be described later for a surface of the substrate layer 1 on a side opposite to a surface facing the sealant layer 2. A method of measuring the probe descendent temperature will be described later in detail.

The substrate layer 1 may be an unstretched film or a stretched film. The substrate layer 1 is desirably a stretched film. In a case where the substrate layer 1 is a stretched film, the substrate layer 1 is particularly excellent in heat resistance and strength. In addition, the elongation of the substrate layer 1 is reduced, and the printability is improved. Here, in the present specification, the term "film" does not include the concept of thickness.

When the substrate layer 1 is a stretched film, the substrate layer 1 may be a uniaxially stretched film or a biaxially stretched film. When a uniaxially stretched film is used as the substrate layer 1, heat resistance at the time of bag formation, that is, sealing property described later is improved. When a biaxially stretched film is used as the substrate layer 1, the drop resistance of a packaged article using the laminate 10A as a packaging material is improved.

Whether the stretched film is a uniaxially stretched film or a biaxially stretched film can be determined by performing in-plane measurement by a wide angle X-ray diffraction method as described below. The X-ray diffraction pattern obtained by this measurement includes information on the degree of orientation of molecular chains present on the film surface. An example of a measurement method will be described.

First, an out-of-plane measurement is performed by a parallel beam method using a wide-angle X-ray diffractometer manufactured by Rigaku Corporation. An X-ray diffraction pattern of a film to be measured is obtained by performing 2θ/θ scan in a range of a diffraction angle of 10° to 30°. CuK_{α} rays are used as X-rays, and X-rays collimated by a multilayer film mirror are made incident on the substrate layer 1. As the light receiving unit, a scintillation detector to which a flat plate collimator is attached is used.

From the obtained X-ray diffraction pattern, the peak area of the crystal component and the halo pattern area of the amorphous component are determined, and the ratio of the peak area of the crystal component to the total area is calculated as the crystallinity.

In a case where the film to be measured has a plurality of layers, the degree of crystallinity of any one of the outermost surfaces of the film is measured.

In a case where the film to be measured is a polyethylene film, when scanning is performed at a diffraction angle in the range of 10° to 30°, peaks of two sharp crystal components corresponding to the (110) plane and the (200) plane and a halo pattern of a broad amorphous component are observed.

In order to determine whether the film to be measured is a uniaxially stretched film or a biaxially stretched film, in-plane measurement by an X-ray diffraction method can be used as described above. In this in-plane measurement, an X-ray incident angle θ and an angle 2θ at which a diffracted X-ray is detected by a detector are fixed to an angle θ and an angle 2θ, respectively, when a diffraction peak corresponding to a specific crystal plane in the above-described out-of-plane measurement, for example, a diffraction peak corresponding to a (110) plane of a polyethylene film is detected, and in this state, a film to be measured is scanned in an in-plane direction to obtain a diffraction pattern.

When in-plane measurement is performed on a uniaxially stretched film uniaxially stretched in the machine direction (MD), a diffraction pattern having a sharp diffraction peak corresponding to the (110) plane at a position where the angle 2θ is about ±90° can be obtained when the MD direction is defined as 0°. On the other hand, in the case of a biaxially stretched film, since the higher-order structure obtained by uniaxial stretching is disturbed by the second stretching and the anisotropy is reduced, a diffraction pattern having a sharp diffraction peak corresponding to this (110) plane cannot be obtained. Therefore, in-plane measurement can be mentioned as one of methods for distinguishing a uniaxially stretched film and a biaxially stretched film from each other.

As described above, when the polymer film is uniaxially stretched, a higher-order structure appears. This higher-order structure is called a shish kebab structure. The shish kebab structure includes a shish structure which is an elongated chain crystal and a kebab structure which is a lamellar crystal. In the uniaxially stretched film, this higher-order structure is arranged with a high degree of order, and therefore the X-ray diffraction pattern obtained by the above measurement on the uniaxially stretched film will include a sharp diffraction peak. That is, when the above measurement is performed on a uniaxially stretched film, a clear diffraction peak appears. The "clear diffraction peak" means a diffraction peak having a halfvalue width of less than 10°.

On the other hand, in the production of a biaxially stretched film, the film is stretched in a specific direction, and then stretched in a direction perpendicular to the previous direction. Therefore, although the above-described higher-order structure is generated by the first stretching, this higher-order structure is disturbed by the second stretching. Therefore, when the above measurement is performed on a biaxially stretched film, the diffraction peak is broad in the X-ray diffraction pattern obtained by this measurement. In other words, when the above measurement is performed on a biaxially stretched film, a clear diffraction peak is not seen.

As described above, the X-ray diffraction pattern obtained by the above measurement is different between the uniaxially stretched film and the biaxially stretched film. Therefore, based on this, whether the stretched film is a uniaxially stretched film or a biaxially stretched film can be determined.

The haze of the substrate layer 1 is preferably 20% or less, and more preferably 10% or less. The haze is a value obtained by a method in accordance with JIS K7136: 2000.

The thickness of the substrate layer 1 is preferably in the range of 10 µm to 200 µm. The thickness of the substrate layer 1 is, for example, in a range of 10 µm to 50 um, in a range of 15 µm to 50 µm, or in a range of 12 µm to 35 um. When the substrate layer 1 is too thin, the strength of the laminate 10A1 tends to decrease. In addition, when the substrate layer 1 is too thick, the processing suitability of the laminate 10A1 tends to be deteriorated.

The substrate layer 1 is preferably surface-treated. According to this treatment, the adhesion between the substrate layer 1 and the layer adjacent to the substrate layer 1 can be improved.

The surface treatment method is not particularly limited. Examples of the surface treatment include physical treatments such as corona discharge treatment, ozonation, low temperature plasma treatment using oxygen gas and/or nitrogen gas, glow discharge treatment, and chemical treatments such as oxidation using a chemical agent.

The substrate layer 1 may further contain an additive. Examples of the additive include cross-linking agents, antioxidants, antiblocking agents, lubricants (slip agents), ultraviolet absorbers, light stabilizers, fillers, reinforcing agents, antistatistic agents, pigments, modifier resins, and the like.

### <1.3> Sealant layer

The sealant layer 2 faces the substrate layer 1. The sealant layer 2 contains polyethylene. Preferably, the sealant layer 2 is made of polyethylene.

The sealant layer 2 may be transparent or opaque. In the latter case, the sealant layer 2 is preferably white. When the laminate 10A in which the sealant layer 2 is transparent is used for a package, the contents thereof are easily visually recognized. When the laminate 10A in which the sealant layer 2 is opaque is used for a package, the content does not hinder the visual recognition of the image displayed on the printed layer 4. In particular, the white sealant layer 2 improves the visibility of an image displayed on the printed layer 4.

### <1.4> Printed layer

The printed layer 4 is provided on a surface of the substrate layer 1 facing the sealant layer 2, that is, on a back surface of the substrate layer 1.

The printing ink used for the printed layer 4 is not particularly limited as long as it has adhesiveness to polyethylene. The printed layer 4 is made of, for example, ink in which additives such as various pigments, extender pigments, plasticizers, desiccants, and stabilizers are added to conventionally used ink binder resins such as urethane-based, acrylic-based, nitrocellulose-based, rubber-based, and vinyl chloride-based ink binder resins. As the printing ink, it is preferable to use a biomass-derived ink. As the ink, a biomass ink containing a biomass-derived material can also be preferably used. In addition, a light-shielding ink can also be preferably used. Examples of the light-shielding ink include white ink, black ink, silver ink, sepia ink, and the like.

As the printing method, for example, known printing methods such as an offset printing method, a gravure printing method, a flexographic printing method, and a silk screen printing method, and known coating methods such as roll coating, knife edge coating, and gravure coating can be used.

The printed layer 4 may be provided at any position between the substrate layer 1 and the sealant layer 2. For example, when the laminate 10A further includes an intermediate layer described later, the printed layer 4 may be provided on any surface of the intermediate layer. In other words, the printed layer 4 may be provided between any layers. The printed layer 4 may be provided on the surface of the substrate layer 1 or may be omitted. Further, the laminate 10A may include a plurality of printed layers.

### <1.5> Adhesive agent layer

In the adhesive agent layer 3, the substrate layer 1 provided with the printed layer 4 and the sealant layer 2 are bonded to each other. As the adhesive for forming the adhesive agent layer 3, for example, a general adhesive for dry lamination is used.

The adhesive agent layer 3 contains at least one type of adhesive. The adhesive may be a one-component curable adhesive, a two-component curable adhesive, or a noncurable adhesive. The adhesive may be a solventless type adhesive or a solvent type adhesive.

Examples of the adhesive include polyether-based adhesives, polyester-based adhesives, silicone-based adhesives, epoxy-based adhesives such as polyamine-based adhesives, urethane-based adhesives, rubber-based adhesives, vinyl-based adhesives, silicone-based adhesives, epoxy-based adhesives, phenol-based adhesives, and olefinbased adhesives. An adhesive containing a biomass component can also be preferably used. The adhesive is preferably a polyamine-based adhesive having gas barrier property or a urethane-based adhesive.

The adhesive agent layer 3 may be a cured product of a resin composition containing a polyester polyol, an isocyanate compound, and a phosphoric acid-modified compound. Such an adhesive agent layer 3 can further improve the oxygen barrier properties and the water vapor barrier properties of the laminate 10A1.

The thickness of the adhesive agent layer 3 is preferably in the range of 0.1 µm to 20 µm, more preferably in the range of 0.5 µm to 10 um, and still more preferably in the range of 1 to 5 µm.

The adhesive agent layer 3 can be formed by applying and drying the adhesive agent layer 3 on the sealant layer 2 by a conventionally known method such as a direct gravure roll coat method, a gravure roll coat method, a kiss coat method, a reverse roll coat method, a fountain method or a transfer roll coat method.

### <1.6> Method of measuring probe descendent temperature

Hereinafter, a method of measuring the probe descendent temperature will be described.

The probe descendent temperature is a temperature obtained by measuring the rise/fall behavior of the probe, and is a temperature obtained by performing local thermal analysis.

An atomic force microscope (AFM) equipped with a nanothermal microscope composed of a cantilever (probe) having a heating mechanism is used to measure the probe descendent temperature. In the measurement, first, a resin substrate in a solid state is fixed as a sample to a sample stage. Next, the cantilever is brought into contact with the surface of the sample, a constant force (contact pressure) is applied to the cantilever in a contact mode, and heating is performed by applying a voltage. Then, the sample surface is thermally expanded, and the cantilever is raised. When the voltage is increased to further rise the temperature of the cantilever, the sample surface is softened and a large change in hardness is observed. At that time, the cantilever descends and enters the sample. The probe descendent temperature is obtained from the relationship between the displacement of the cantilever and the voltage during this measurement. In other words, the temperature at which the position of the cantilever rapidly changes is the softening point of the sample. The temperature obtained by converting the voltage at this time is the softening temperature, that is, the probe descendent temperature.

By performing such measurement, not the average softening temperature of the entire sample but the softening temperature in the nanoscale region can be found. Specifically, the softening temperature of the surface region of the sample can be found.

As the atomic force microscope, MPF-3D-SA (product name) and Ztherm system (product name) manufactured by Oxford Instruments K.K. are used. The atomic force microscope is not particularly limited to this apparatus, Nano Thermal Analysis (product name) series or nanoIR (product name) series manufactured by Bruker Japan K.K can be used. Furthermore, Nano Thermal Analysis (product name) can be attached to an atomic force microscope of another manufacturer and use it for the measurement.

As the cantilever, AN2-200 (product name) manufactured by Analysis Instruments Inc. is used. The cantilever is not particularly limited thereto, and other cantilevers may be used as long as the cantilever can sufficiently reflect laser light and apply a voltage.

The voltage range to be applied to the cantilever is preferably from 1 V to 10 V depending on a measurement target resin or the like, and more preferably from 3 V to 8 V in order to measure the sample with less damage and higher spatial resolution.

The measurable temperature range depends on the resin or the like to be measured, but generally, the measurement start temperature is about 25°C or more of the normal temperature, and the measurement end temperature is about 400°C or less. The temperature range for calculating the probe descendent temperature is preferably 25°C or more and 300°C or less.

In the measurement of the probe descendent temperature, as described above, heat is applied to the sample with the contact pressure by the cantilever kept constant. In order to apply the tactile pressure, the cantilever needs to be brought into contact with the sample, but the tactile pressure needs to be set to such an extent that the surface of the sample is not destroyed. The spring constant of the cantilever is preferably 0.1 to 3.5 N/m, and is preferably 0.5 to 3.5 N/m in order to perform measurement in both the tapping mode and the contact mode. The contact pressure is preferably 0.1 to 3.0 V.

The temperature raising rate (voltage raising rate) of the cantilever is generally preferably 0.1 V/sec or more and 10 V/sec or less although it depends on a heating mechanism or the like included in the cantilever. The heating rate is more preferably 0.2 V/s or more and 5 V/s or less.

As described above, when the sample surface softens, the cantilever enters the sample and descends. The penetration amount of the cantilever is preferably 3 to 500 nm because it is necessary to have a size capable of recognizing the peak top of the softening curve. When the penetration amount is large, the cantilever (probe) may be damaged, and thus the penetration amount of the cantilever is more preferably 5 to 100 nm.

The probe lowering start point and the probe descendent temperature may be obtained by approximating each of the expansion curve and the softening curve by a function as necessary and calculating an intersection of the approximate curves. Alternatively, an analysis method may be used in which the peak top of displacement is set as a probe lowering start point or a probe descendent temperature. Alternatively, the probe lowering start point and the probe descendent temperature may be obtained from the voltage when the displacement reaches a specific value from the steady state.

As described above, the probe descendent temperature is converted from the voltage. For this conversion, a standard curve (calibration curve) can be used. In order to obtain an accurate probe descendent temperature, a calibration curve is created, for example, after measurement is performed on a sample. As the calibration sample, four kinds of polycaprolactone (melting point: 55°C), low-density polyethylene (LDPE, melting point 110°C), polypropylene (PP, melting point: 164°C), and polyethylene terephthalate (PET, melting point: 235°C) are used. For each of the calibration samples, two or more measurements are performed while changing the measurement position, and an average value of the voltage corresponding to the probe lowering start point is obtained from these measurement results. Then, a standard curve (calibration curve) is created from the average value of the voltages obtained for all the calibration samples and their melting points. In this calibration curve, the probe descendent temperature is obtained with reference to the voltage obtained for the sample.

### <1.7> Effects

The laminate 10A1 described above is excellent in heat resistance. This will be described below.

The production of a packaging bag generally includes a step of bringing sealant layers of laminates into contact with each other, sandwiching a portion where the sealant layers are in contact with each other between parts of a jig, and applying pressure and heat to thermally weld (heatseal) the contact portion. The jig of the heat-sealing machine is set to a high temperature, and the surface of the substrate layer in direct contact with the jig is exposed to a high temperature. As a result, when polyethylene having poor heat resistance is used for the substrate layer, there may be a problem that the surface of the substrate layer is damaged by heat and adheres to the jig. Therefore, the conventional laminate using polyethylene for the substrate layer has a problem that the proper condition of the bag production temperature is narrow and the productivity is poor.

As a result of measuring the probe descendent temperatures of various polyethylenes, the inventors of the present invention have found that when the probe descendent temperature of the substrate layer 1 is 180°C or higher, the substrate layer 1 exhibits excellent heat resistance, and therefore the laminate 10A1 also exhibits excellent heat resistance, and particularly achieves good heat-sealing suitability.

In the laminate 10A1, polyethylene, which is generally said to have poor heat resistance, is used as the substrate layer 1. However, by setting the probe descendent temperature of the substrate layer 1 to 180°C or higher, the temperature range of heat-sealing performed for bag production is widened, and productivity is not deteriorated.

Furthermore, in the laminate 10A1, the ratio of polyethylene is 90 mass% or more. Therefore, the laminate 10A1 is also excellent in recyclability.

### <1.8> Modification

The laminate 10A1 can be modified in various ways.

FIG. 2 is a cross-sectional view schematically illustrating a modification of the laminate illustrated in FIG. 1. A laminate 10A2 illustrated in FIG. 2 is the same as the laminate 10A1 except that an inorganic compound layer 5 interposed between the substrate layer 1 and the printed layer 4 is further included. The inorganic compound layer 5 is a thin film made of an inorganic compound, for example, an inorganic oxide such as aluminum oxide or silicon oxide, and functions as a gas barrier layer that suppresses permeation of oxygen and water vapor. The laminate 10A2 may include the coating layer described in the second embodiment instead of the inorganic compound layer 5. Alternatively, the laminate 10A2 may further include the coating layer between the inorganic compound layer 5 and the adhesive agent layer 3. The coating layer or a combination of the coating layer and the inorganic compound layer 5 can also function as the gas barrier layer.

The laminate 10A2 is also excellent in heat resistance. Further, since the inorganic compound layer 5 is substantially transparent, even if the inorganic compound layer 5 is provided between the substrate layer 1 and the printed layer 4, the image displayed by the printed layer 4 can be visually recognized from the surface side. The laminate 10A2 is also excellent in recyclability.

In the laminates 10A1 and 10A2, a metal vapor deposition layer may be provided between the substrate layer 1 and the sealant layer 2 in order to impart a light shielding property. When the laminate further includes an intermediate layer described later, a metal vapor deposition layer may be provided on any surface of the intermediate layer. Examples of the metal vapor deposition layer include an aluminum vapor deposition layer.

Although the sealant layer 2 may be opaque as described above, the substrate layer 1 may also be opaque. For example, the substrate layer 1 may be white. When the laminate further includes an intermediate layer described later, the intermediate layer may be opaque. For example, the intermediate layer may be white.

### <2> Second embodiment

### <2.1> Laminate

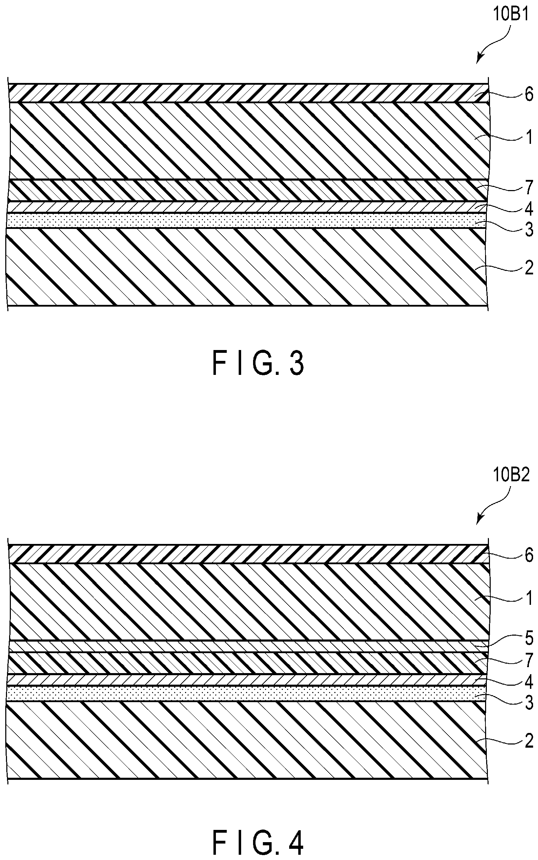

FIG. 3 is a cross-sectional view schematically illustrating a laminate according to the second embodiment of the present invention.

A laminate 10B1 illustrated in FIG. 3 is the same as the laminate 10A1 except that the laminate further includes a protective layer 6 provided on the surface of the substrate layer 1 and a coating layer 7 interposed between the substrate layer 1 and the printed layer 4.

### <2.2> Protective layer

The protective layer 6 is an outermost layer facing the sealant layer 2 with the substrate layer 1 interposed therebetween. Here, the protective layer 6 covers the surface of the substrate layer 1.

According to one example, the protective layer 6 is made of a thermosetting resin. In other words, the protective layer 6 is a thermosetting resin layer. The cured product of the thermosetting resin is not particularly limited as long as it has heat resistance. As the thermosetting resin, for example, a urethane resin, a polyester resin, a polyamide resin, an acrylic resin, and an epoxy resin can be used alone or in combination.

According to one embodiment, the protective layer 6 preferably contains a water-soluble polymer, and is preferably an organic-inorganic composite layer further containing an organometallic compound.

Examples of the water-soluble polymer include polysaccharide such as a polyvinyl alcohol-based, a starch methylcellulose carboxymethylcellulose, and the like and a hydroxyl group-containing polymer such as an acrylic polyol-based, and the like. According to one embodiment, the protective layer 6 preferably contains a polyvinyl alcohol-based hydroxyl group-containing polymer that can be contained in the coating layer 7.

The protective layer 6 preferably contains, as the organometallic compound, at least one of a metal alkoxide, a hydrolysate of the metal alkoxide, and a reaction product of the metal alkoxide or the hydrolysate thereof. Examples of the metal alkoxide include those represented by general formula M(OR)ₙ such as tetraethoxysilane [Si (OC₂H₅)₄], triisopropoxy aluminum [Al(OC₃H₇)₃] and the like.

In addition, the protective layer 6 preferably further contains, as the organometallic compound, at least one of a silane coupling agent, a hydrolysate of the silane coupling agent, and a reaction product of the silane coupling agent or a hydrolysate of the silane coupling agent.

According to one embodiment, the protective layer 6 can be formed using a coating liquid for forming the coating layer 7.

The protective layer 6 reduces thermal damage at the time of heat-sealing on the surface of the laminate. In a case where the thickness of the protective layer 6 is 0.3 um or more, the effect of reducing thermal damage is particularly large. However, when the thickness of the protective layer 6 is increased, insufficient drying of a coating film made of a thermosetting resin is likely to occur, or productivity is reduced. Therefore, the thickness of the protective layer 6 is preferably 3 µm or less, and more preferably less than 3 µm.

### <2.3> Coating layer

The coating layer 7 functions as a barrier layer that suppresses permeation of oxygen and water vapor. When a high barrier property is not required, the coating layer 7 can be omitted.

The coating layer 7 can be formed, for example, by coating. In this case, a coating liquid containing a resin such as polyvinyl alcohol (PVA), an ethylene-vinyl alcohol copolymer, an ethylene-vinyl acetate copolymer, polyvinylidene chloride, polyacrylonitrile, an epoxy resin, and the like can be used. Additives such as organic or inorganic particles, a layered compound, and a curing agent may be added to this coating liquid.

Alternatively, the coating layer 7 is a film containing a hydroxyl group-containing polymer and an organosilicon compound. The coating layer 7 may be, for example, an organic-inorganic composite layer containing a reaction product of hydrolysis and dehydration condensation of an alkoxide and a water-soluble polymer. The organic-inorganic composite layer may further contain a reaction product of a silane coupling agent.

Examples of the alkoxide used for forming the organic-inorganic composite layer include alkoxides represented by the general formula M(OR)ₙ such as tetraethoxysilane [Si (OC₂H₅)₄] and triisopropoxyaluminum [Al(OC₃H₇)₃]. One of these may be contained one type, or two or more types thereof may be used in combination.

The total content of the alkoxide, the hydrolysate thereof, or the reaction product thereof in the coating liquid used for forming the organic-inorganic composite layer may be, for example, 40 mass% or more, 50 mass% or more, or 65 mass% or more from the viewpoint of oxygen barrier properties. The total content of the alkoxide, the hydrolysate thereof, or the reaction product thereof in the coating solution may be, for example, 70 mass% or less.

The water-soluble polymer contained in the organic-inorganic composite layer is not particularly limited, and examples thereof include polysaccharide such as a polyvinyl alcohol-based, a starch methylcellulose carboxymethylcellulose, and the like and a hydroxyl group-containing polymer such as an acrylic polyol-based, and the like. From the viewpoint of further improving the oxygen gas barrier property, the water-soluble polymer preferably contains a polyvinyl alcohol-based water-soluble polymer. The number average molecular weight of the water-soluble polymer is, for example, from 40000 to 180000.

The polyvinyl alcohol-based water-soluble polymer contained in the organic-inorganic composite layer can be obtained, for example, by saponifying (including partial saponification) polyvinyl acetate. In this water-soluble polymer, several tens% of acetic acid groups may remain, or only several% of acetic acid groups may remain.

The content ratio of the water-soluble polymer in the coating liquid used for forming the organic-inorganic composite layer may be, for example, 15 mass% or more or 20 mass% or more from the viewpoint of oxygen barrier properties. The content ratio of the water-soluble polymer in the coating liquid may be, for example, 50 mass% or less or 45 mass% or less from the viewpoint of oxygen barrier properties.

Examples of the silane coupling agent used for the organic-inorganic composite layer include silane coupling agents having an organic functional group. Examples of the silane coupling agent include ethyltrimethoxysilane, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, γ-methacryloxypropylmethyldimethoxysilane, and the like. One of a silane coupling agent selected from these, a hydrolysate thereof, and a reaction product thereof can be used alone, or two or more thereof can be used in combination.

As the silane coupling agent, one having an epoxy group as an organic functional group is preferably used. Examples of the silane coupling agent having an epoxy group include γ-glycidoxypropyltrimethoxysilane and β- (3,4-epoxycyclohexyl) ethyltrimethoxysilane. The silane coupling agent having an epoxy group may have an organic functional group different from the epoxy group, such as a vinyl group, an amino group, a methacrylic group, or a ureyl group. One of a silane coupling agent selected from these, a hydrolysate thereof, and a reaction product thereof can be used alone, or two or more thereof can be used in combination.

The silane coupling agent having an organic functional group, a hydrolysate thereof, or a reaction product thereof can further improve the oxygen barrier properties of the coating layer and the adhesion between the coating layer and the adjacent layer by the interaction between the organic functional group and the hydroxyl group of the water-soluble polymer. In particular, in a case where the silane coupling agent, a hydrolysate thereof, or a reaction product thereof has an epoxy group, and the water-soluble polymer is polyvinyl alcohol (PVA), the oxygen barrier properties and the adhesion between adjacent layers can be further improved by the interaction between the epoxy group and the hydroxyl group of PVA.

The total content ratio of the silane coupling agent, the hydrolysate thereof, and the reaction product thereof in the coating liquid used for forming the organic-inorganic composite layer may be, for example, 1 mass% or more and 2 mass% or more from the viewpoint of oxygen barrier properties. Further, the total content of the silane coupling agent, the hydrolysate thereof, and the reaction product thereof in the coating solution may be, for example, 15 mass% or less or 12 mass% or less from the viewpoint of oxygen barrier properties.

The thickness of the coating layer 7 is preferably 50 nm or more and 1000 nm or less, and more preferably 100 nm or more and 500 nm or less. In a case where the thickness of the coating layer 7 is 50 nm or more, more sufficient gas barrier properties tend to be obtained, and when the thickness is 1000 nm or less, sufficient flexibility tends to be maintained.

### <2.4> Effects

The laminate 10B1 includes the protective layer 6. As described above, the protective layer 6 reduces thermal damage at the time of heat-sealing on the surface of the laminate. Therefore, the laminate 10B1 can achieve further excellent heat resistance, particularly better heat-sealing suitability. Therefore, when the above-described configuration is adopted for the laminate 10B1, the temperature range of the heat-sealing performed for bag production is widened, and the deterioration in productivity is further less likely to occur.

In other words, the laminate 10B1 is further excellent in heat resistance. Then, the laminate 10B1 is also excellent in recyclability.

### <2.5> Modification

The laminate 10B1 can be modified in various ways.

FIG. 4 is a cross-sectional view schematically illustrating a modification of the laminate illustrated in FIG. 3. A laminate 10B2 illustrated in FIG. 4 is the same as the laminate 10B1 except that the inorganic compound layer 5 described above is further included between the substrate layer 1 and the coating layer 7.

In the laminate 10B2, a combination of the coating layer 7 and the inorganic compound layer 5 functions as a barrier layer. In the laminate 10B2, the coating layer 7 may be omitted.

Similarly to the laminate 10B1, the laminate 10B2 is further excellent in heat resistance. Then, the laminate 10B2 is also excellent in recyclability.

### <3> Third embodiment

### <3.1> Laminate

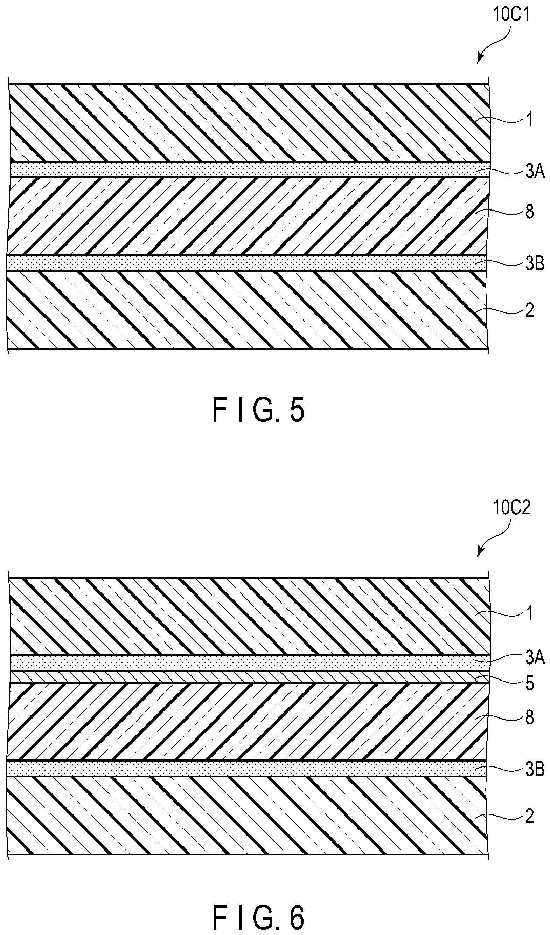

FIG. 5 is a cross-sectional view schematically illustrating a laminate according to a third embodiment of the present invention.

The laminate 10C1 illustrated in FIG. 5 is the same as the laminate 10A1 except for the following matters. In other words, the laminate 10C1 does not include the printed layer 4, and further includes the intermediate layer 8. Further, the laminate 10C1 includes the first adhesive agent layer 3A and the second adhesive agent layer 3B instead of the adhesive agent layer 3.

### <3.3> Sealant layer

The sealant layer 2 contains polyethylene in the same manner as the substrate layer 1 described above. With such a configuration, a recyclable packaging material or the like having sufficient strength and heat resistance can be produced.

Examples of the resin constituting the sealant layer 2 include ethylene-based resins such as a low-density polyethylene resin (LDPE), a medium-density polyethylene resin (MDPE), a linear low-density polyethylene resin (LLDPE), an ethylene-vinyl acetate copolymer (EVA), an ethylene-α-olefin copolymer, and an ethylene- (meth) acrylic acid copolymer; a blend resin of polyethylene and polybutene; a polypropylene-based resin such as a propylene-ethylene random copolymer or a propylene-ethylene block copolymer, and the like can be used. These thermoplastic resins can be appropriately selected depending on intended use and temperature conditions such as boiling treatment.

The sealant layer 2 can contain the additive described above as long as the characteristics described for the laminate 10C1 are not impaired.

The thickness of the sealant layer 2 can be appropriately set in consideration of the shape of the packaging bag to be produced, the mass of the content to be accommodated, and the like, but it can be set to, for example, 30 to 150 um.

Here, the sealant layer 2 is obtained by bonding a sealant film to the intermediate layer 8 via an adhesive. The sealant layer 2 can also be formed by an extrusion lamination method or the like in which a thermoplastic resin is heated and melted, extruded into a curtain shape, and bonded to the intermediate layer 8. In this case, the second adhesive agent layer 3B may be omitted.

### <3.4> Intermediate layer

The intermediate layer 8 is interposed between the substrate layer 1 and the sealant layer 2. The intermediate layer 8 contains polyethylene. In the laminate 10C1, the intermediate layer 8 has the above-described probe descendent temperature of 180°C or higher. The intermediate layer 8 preferably has the above-described probe descendent temperature of 220°C or lower. Such an intermediate layer 8 enhances the recyclability of the laminate 10C1 and contributes to improvement in strength, particularly puncture resistance.

The intermediate layer 8 having a probe descendent temperature of 180°C or higher is preferably a stretched film. The stretched film may be a uniaxially stretched film or a biaxially stretched film.

According to this embodiment, an intermediate layer having a probe descendent temperature of 140°C or higher and lower than 180°C may be used. By using the intermediate layer having a probe descendent temperature of 140°C or higher and lower than 180°C, the strength of the laminate, particularly the drop resistance can be improved. The intermediate layer having a probe descendent temperature of 140°C or higher and lower than 180°C is preferably an unstretched film.

As the polyethylene, for example, those described above for the polyethylene contained in the substrate layer 1 can be used. Among the above, the polyethylene contained in the intermediate layer 8 is preferably high density polyethylene or medium density polyethylene from the viewpoint of strength, heat resistance, and proper stretching of the film.

The intermediate layer 8 can contain the additive described above as long as the characteristics described for the laminate 10C1 are not impaired.

The thickness of the intermediate layer 8 is preferably 9 um or more and 50 µm or less, and more preferably 12 um or more and 30 µm or less.

When the thickness of the intermediate layer 8 is increased, the strength and heat resistance of the laminate 10C1 can be enhanced. When the thickness of the intermediate layer 8 is reduced, the processing suitability of the laminate 10C1 can be improved.

As the intermediate layer 8, one produced by the T-die method or the inflation method described above may be used, or a commercially available method may be used.

### <3.5> Adhesive agent layer

The first adhesive agent layer 3A is placed between the substrate layer 1 and the intermediate layer 8, and is bonded to the substrate layer 1 and the intermediate layer 8. The second adhesive agent layer 3B is placed between the sealant layer 2 and the intermediate layer 8, and is bonded thereto. These adhesive agent layers improve adhesion between the layers.

As the adhesive for forming the first adhesive agent layer 3A and the second adhesive agent layer 3B, for example, a known adhesive for dry lamination can be used. The adhesive can be used without particular limitation as long as it is an adhesive for dry lamination. Specific examples the adhesive can include two-liquid curable esterbased adhesives, ether-based adhesives, and one-liquid curable or two-liquid curable urethane-based adhesives. The substrate layer 1 and the intermediate layer 8 may be bonded to each other, and the sealant layer 2 and the intermediate layer 8 may be bonded to each other by a non-solvent dry lamination method using a solvent-free adhesive.

As the adhesive for forming the first adhesive agent layer 3A and the second adhesive agent layer 3B, a gas barrier adhesive that exhibits a gas barrier property after curing can also be used. By using the gas barrier adhesive, the gas barrier property of the laminate 10C1 can be improved. The oxygen permeability of the adhesive agent layer formed of the gas barrier adhesive is preferably 150 cc/m²·day·atm or less, more preferably 100 cc/m²·day·atm or less, still more preferably 80 cc/m²·day·atm or less, and particularly preferably 50 cc/m²·day·atm or less. When the adhesive agent layer having low oxygen permeability is provided, the gas barrier property of the laminate 10C1 can be enhanced.

In addition, as described later, the laminate 10C1 may further include an inorganic compound layer. In a case where the gas barrier adhesive is used, even when a slight crack or the like is generated in the inorganic compound layer, the gas barrier adhesive penetrates into the gap generated in the inorganic compound layer by applying the gas barrier adhesive on the inorganic compound layer, whereby the deterioration of the gas barrier property can be suppressed.

Examples of the gas barrier adhesive include an epoxy-based adhesive and a polyester-polyurethane-based adhesive. Specific examples of the gas barrier adhesive include "Maxive" manufactured by MITSUBISHI GAS CHEMICAL COMPANY, INC., and "Paslim" manufactured by DIC Corporation.

In a case where the first adhesive agent layer 3A and the second adhesive agent layer 3B are made of a gas barrier adhesive, their thicknesses are preferably 50 times or more than the thickness of the inorganic compound layer. When the first adhesive agent layer 3A and the second adhesive agent layer 3B are thickened, the effect of suppressing cracking of the inorganic compound layer is enhanced, and the gas barrier property of the laminate 10C1 is improved. When the first adhesive agent layer 3A and the second adhesive agent layer 3B are thickened, a cushioning property for alleviating an external impact can be further imparted to these adhesive agent layers, and the inorganic compound layer can be prevented from being broken by the impact. From the viewpoint of maintaining flexibility, processing suitability, and cost of the laminate 10C1, the thicknesses of the first adhesive agent layer 3A and the second adhesive agent layer 3B are preferably 300 times or less than the thickness of the inorganic compound layer.

The thicknesses of the first adhesive agent layer 3A and the second adhesive agent layer 3B are, for example, 0.1 to 20 µm, preferably 0.5 to 10 µm, and more preferably 1 to 5 um.

The adhesive can be applied by, for example, a bar coating method, a dipping method, a roll coating method, a gravure coating method, a reverse coating method, an air knife coating method, a comma coating method, a die coating method, a screen printing method, a spray coating method, or a gravure offset method. The temperature at which the coating film of the adhesive is dried can be, for example, 30 to 200°C, and is preferably 50 to 180°C. The temperature at which the coating film is cured can be, for example, room temperature to 70°C, and is preferably 30 to 60°C. By setting the temperature during drying and curing within the above range, the occurrence of cracks in the inorganic compound layer, the first adhesive agent layer 3A, and the second adhesive agent layer 3B can be further suppressed, and excellent gas barrier properties can be exhibited.

From the viewpoint of preventing cracking of the inorganic compound layer 5, it is preferable that the first adhesive agent layer 3A or the second adhesive agent layer 3B and the inorganic compound layer are in direct contact with each other, but another layer may be interposed therebetween.

### <3.6> Effects

In the laminate 10C1 described above, the probe descendent temperature of the substrate layer 1 is within the above range. Therefore, the laminate 10C1 is excellent in heat resistance similarly to the laminate 10A1.

In addition, the laminate 10C1 includes the intermediate layer 8 in which the probe descendent temperature is within the above range. The intermediate layer 8 increases the strength of the laminate 10C1, particularly the puncture resistance. Therefore, the laminate 10C1 is excellent in strength, particularly puncture resistance.

Then, the ratio of polyethylene in the laminate 10C1 is 90 mass% or more. Therefore, the laminate 10C1 is also excellent in recyclability.

Further, a laminate having a high ratio of polyethylene has weaker stiffness than other laminates, and therefore is often folded when used as a packaging material. When the number of times of bending increases, the possibility that pinholes are generated increases, but the laminate 10C1 having excellent puncture resistance hardly generates pinholes.

### <3.7> Modification

The laminate 10C1 can be modified in various ways.

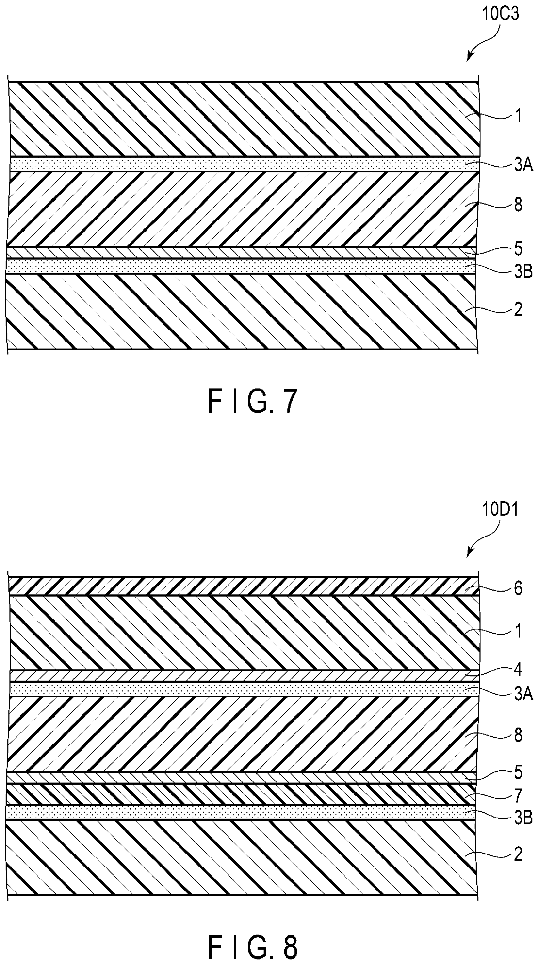

FIG. 6 is a cross-sectional view schematically illustrating a first modification of the laminate illustrated in FIG. 5. FIG. 7 is a cross-sectional view schematically illustrating a second modification of the laminate illustrated in FIG. 5.

The laminate 10C2 illustrated in FIG. 6 and the laminate 10C3 illustrated in FIG. 7 are the same as the laminate 10C1 except that the inorganic compound layer 5 is further included. In the laminate 10C2, the inorganic compound layer 5 is placed between the first adhesive agent layer 3A and the intermediate layer 8. In the laminate 10C3, the inorganic compound layer 5 is placed between the second adhesive agent layer 3B and the intermediate layer 8. In other words, in the laminate 10C2, the inorganic compound layer 5 is provided on one surface of the intermediate layer 8, and in the laminate 10C3, the inorganic compound layer 5 is provided on the other surface of the intermediate layer 8. The inorganic compound layer 5 may be provided on both surfaces of the intermediate layer 8. The inorganic compound layer 5 may be placed between the substrate layer 1 and the first adhesive agent layer 3A.

The inorganic compound layer 5 improves the gas barrier property of the laminate, specifically, the oxygen barrier property and the water vapor barrier property.

Examples of the material constituting the inorganic compound layer 5 include inorganic oxides such as aluminum oxide, silicon oxide, magnesium oxide, titanium oxide, tin oxide, zinc oxide, and indium oxide, and in particular, aluminum oxide or silicon oxide is preferable because aluminum oxide and silicon oxide are excellent in productivity and are excellent in oxygen barrier properties and water vapor barrier properties in a high temperature or high humidity heat environment. The inorganic compound layer 5 may contain one of these materials alone or in combination of two or more of them.

The thickness of the inorganic compound layer 5 is preferably 1 to 200 nm, and when the thickness is increased, the oxygen barrier properties and the water vapor barrier properties are improved. However, when the thickness is increased, the manufacturing cost is increased, and a crack due to an external force such as bending or pulling is easily generated, and therefore the barrier properties is easily deteriorated due to the crack.

The thickness of the evaporated film made of aluminum oxide is preferably 5 nm or more and 30 nm or less. When the film thickness is 5 nm or more, sufficient gas barrier property can be obtained. When the film thickness is 30 nm or less, it is possible to suppress generation of cracks caused by deformation of the thin film due to internal stress and to suppress deterioration of gas barrier property. If the film thickness exceeds 30 nm, the cost tends to increase due to an increase in the amount of material used, an increase in the film formation time, and the like, which is not preferable from the economic viewpoint. From the same viewpoint as described above, the thickness of the evaporated film made of aluminum oxide is more preferably 7 nm or more and 15 nm or less.

The film thickness of the evaporated film made of silicon oxide is preferably 10 nm or more and 50 nm or less. When the film thickness is 10 nm or more, sufficient gas barrier property can be obtained. When the film thickness is 50 nm or less, it is possible to suppress generation of cracks caused by deformation of the thin film due to internal stress and to suppress deterioration of gas barrier property. If the film thickness exceeds 50 nm, the cost tends to increase due to an increase in the amount of material used, an increase in the film formation time, and the like, which is not preferable from the economic viewpoint. From the same viewpoint as described above, the thickness of the evaporated film made of silicon oxide is more preferably 20 nm or more and 40 nm or less.

The inorganic compound layer 5 can be formed by a known film forming method such as a vacuum vapor deposition method, a sputtering method, an ion plating method, a plasma chemical vapor deposition method (CVD), and the like. From the viewpoint of productivity, a winding-type vacuum vapor deposition method is particularly preferable.

The laminates 10C2 and 10C3 may include the coating layer described in the second embodiment instead of the inorganic compound layer 5. The laminate 10C2 may further include the coating layer between the inorganic compound layer 5 and the first adhesive agent layer 3A. The laminate 10C3 may further include the coating layer between the inorganic compound layer 5 and the second adhesive agent layer 3B. The coating layer or a combination of the coating layer and the inorganic compound layer 5 can also function as the gas barrier layer.

The laminates 10C1, 10C2, and 10C3 may further include one or more of a printed layer, a protective layer, a light shielding layer, and other functional layers as necessary.

The printed layer can be provided at a position visible from the outside in the state of the package for the purpose of displaying information on the content, identifying the content, or improving the design of the packaging bag. The printing method and the printing ink are not particularly limited, and can be appropriately selected from known printing methods and printing inks in consideration of printability to a film, designability such as color tone, adhesion, safety as a food container, and the like. As the ink, a biomass ink containing a biomass-derived material can also be preferably used. In addition, a light-shielding ink can also be preferably used. Examples of the light-shielding ink include white ink, black ink, silver ink, sepia ink, and the like.

Examples of the printing method include a gravure printing method, an offset printing method, a gravure offset printing method, a flexographic printing method, and an inkjet printing method. Among the methods, the gravure printing method is preferable from the viewpoint of productivity and high definition of patterns. In order to enhance the adhesion of the printed layer, various pretreatments such as a corona treatment, a plasma treatment, and a frame treatment may be performed on the surface of the layer forming the printed layer, or a coating layer such as an easily adhesive layer may be provided.

The printed layer is provided, for example, on any of a front surface of the substrate layer 1, a back surface of the substrate layer 1, a surface (front surface) of the intermediate layer 8 facing the substrate layer 1, and a surface (back surface) of the intermediate layer 8 facing the sealant layer 2.

As a method for imparting a light shielding property to the laminate, a metal vapor deposition layer may be provided on the substrate, the intermediate layer or the sealant layer. Examples of the metal vapor deposition layer include aluminum vapor deposition.

### <4> Fourth embodiment

### <4.1> Laminate

FIG. 8 is a cross-sectional view schematically illustrating a laminate according to a fourth embodiment of the present invention.

A laminate 10D1 illustrated in FIG. 8 is the same as the laminate 10C3 except that the laminate 10D1 further includes a printed layer 4 placed between the substrate layer 1 and the first adhesive agent layer 3A, a protective layer 6 provided on the surface of the substrate layer 1, and a coating layer 7 placed between the inorganic compound layer 5 and the second adhesive agent layer 3B. As the printed layer 4, those described in the first and third embodiments can be used. As the protective layer 6 and the coating layer 7, those described in the second embodiment can be used.

### <4.2> Effects

In the laminate 10D1 described above, the probe descendent temperature of the substrate layer 1 is within the above range. The laminate 10D1 includes the protective layer 6. Therefore, the laminate 10D1 can achieve further excellent heat resistance, particularly better heat-sealing suitability. Therefore, when the above-described configuration is adopted for the laminate 10D1, the temperature range of the heat-sealing performed for bag production is widened, and the deterioration in productivity is further less likely to occur.

In addition, the laminate 10D1 includes the intermediate layer 8 in which the probe descendent temperature is within the above range. The intermediate layer 8 increases the strength of the laminate 10D1, particularly the puncture resistance. Therefore, the laminate 10D1 is excellent in strength, particularly puncture resistance.

Furthermore, the substrate layer 1 is excellent in transparency when the haze is small. Therefore, in this case, an image such as a pattern or text displayed on the printed layer 4 can be visually recognized with good visibility.

Then, the ratio of polyethylene in the laminate 10D1 is 90 mass% or more. Therefore, the laminate 10D1 is also excellent in recyclability.

### <4.3> Modification

The laminate 10D1 can be modified in various ways.

For example, the inorganic compound layer 5 may be provided on the front surface of the intermediate layer 8 instead of being provided on the back surface of the intermediate layer 8. In this case, the coating layer 7 is provided so as to coat the inorganic compound layer 5.

One of the inorganic compound layer 5 and the coating layer 7 may be omitted. When high barrier properties are not required, both the inorganic compound layer 5 and the coating layer 7 may be omitted.

The printed layer 4 may be provided on the front surface of the substrate layer 1, on the front surface of the intermediate layer 8, or on the back surface of the intermediate layer 8. In any of the above cases, an image such as a pattern or text displayed on the printed layer 4 can be visually recognized with good visibility. Note that the printed layer 4 may be omitted.

### <5> Fifth embodiment

### <5.1> Laminate

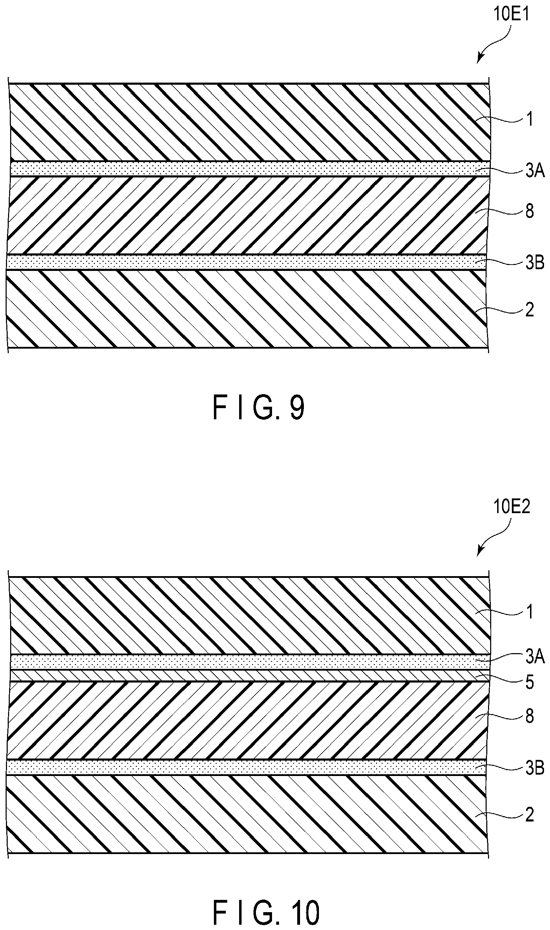

FIG. 9 is a cross-sectional view schematically illustrating a laminate according to a fifth embodiment of the present invention.

A laminate 10E1 illustrated in FIG. 9 is similar to the laminate 10C1 except that the probe descendent temperature of the intermediate layer 8 is 180°C or lower. The probe descendent temperature of the intermediate layer 8 is preferably lower than 180°C. In addition, the probe descendent temperature of the intermediate layer 8 is preferably 140°C or higher. In the laminate 10E1, the intermediate layer 8 is preferably an unstretched film. Such intermediate layer 8 increases the strength of the laminate 10E1, particularly the drop resistance.

Note that, according to the present embodiment, an intermediate layer having a probe descendent temperature of 180°C or higher may be used. When the intermediate layer having a probe descendent temperature in the above range is used, the strength of the laminate, particularly the puncture resistance can be improved. The intermediate layer having a probe descendent temperature of 180°C or higher is preferably a stretched film.

### <5.2> Effects

In the laminate 10E1 described above, the probe descendent temperature of the substrate layer 1 is within the above range. Therefore, the laminate 10E1 is excellent in heat resistance similarly to the laminate 10A1.

In addition, the laminate 10E1 includes the intermediate layer 8 in which the probe descendent temperature is within the above range. The intermediate layer 8 increases the strength of the laminate 10E1, particularly the drop resistance. In other words, in the laminate 10E1, when used in a package, the intermediate layer 8 located inside the substrate layer 1 is softer than the substrate layer 1. This structure is suitable for absorbing an impact generated when a packaged article using the laminate 10E1 as a packaging material is dropped. Therefore, a packaged article using the laminate 10E1 as a packaging material is less likely to be damaged (bag breakage) due to dropping. Therefore, the laminate 10E1 is excellent in strength, particularly drop resistance.

Then, the ratio of polyethylene in the laminate body 10E1 is 90 mass% or more. Therefore, the laminate 10E1 is also excellent in recyclability.

### <5.3> Modification

The laminate 10E1 can be modified in various ways.

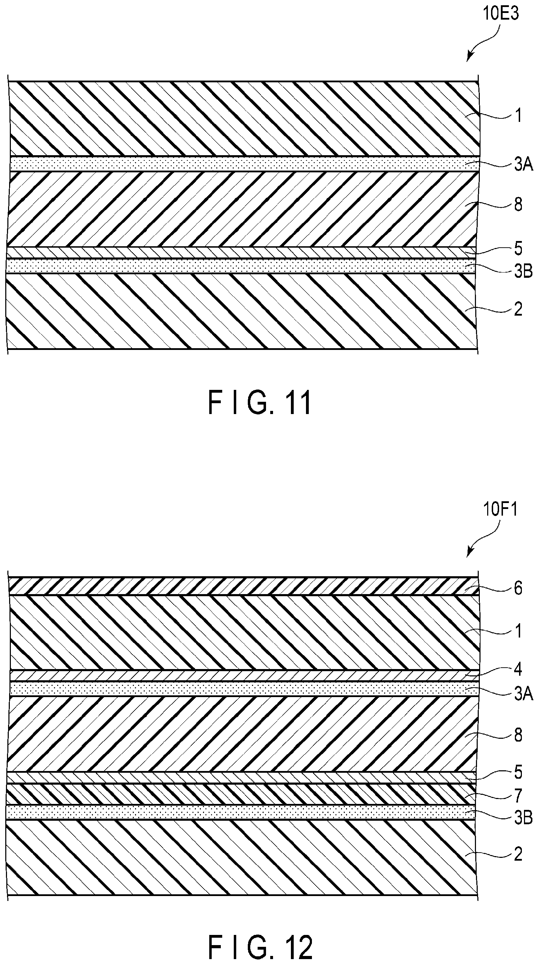

FIG. 10 is a cross-sectional view schematically illustrating a first modification of the laminate illustrated in FIG. 9. FIG. 11 is a cross-sectional view schematically illustrating a second modification of the laminate illustrated in FIG. 9.

The laminate 10E2 illustrated in FIG. 10 and the laminate 10E3 illustrated in FIG. 11 are the same as the laminate 10E1 except that the inorganic compound layer 5 described in the third embodiment is further included. In the laminate 10E2, the inorganic compound layer 5 is placed between the first adhesive agent layer 3A and the intermediate layer 8. In the laminate 10E3, the inorganic compound layer 5 is placed between the second adhesive agent layer 3B and the intermediate layer 8. In other words, in the laminate 10E2, the inorganic compound layer 5 is provided on one surface of the intermediate layer 8, and in the laminate 10E3, the inorganic compound layer 5 is provided on the other surface of the intermediate layer 8. The inorganic compound layer 5 may be provided on both surfaces of the intermediate layer 8. The inorganic compound layer 5 may be placed between the substrate layer 1 and the first adhesive agent layer 3A.

The laminates 10E2 and 10E3 may include the coating layer described in the second embodiment instead of the inorganic compound layer 5. The laminate 10E2 may further include the coating layer between the inorganic compound layer 5 and the first adhesive agent layer 3A. The laminate 10E3 may further include the coating layer between the inorganic compound layer 5 and the second adhesive agent layer 3B. The coating layer or a combination of the coating layer and the inorganic compound layer 5 can also function as the gas barrier layer.

The laminates 10E1, 10E2, and 10E3 may further include one or more of a printed layer, a protective layer, a light shielding layer, and other functional layers as necessary. The printed layer is, for example, the one described in the third embodiment.

### <6> Sixth embodiment

### <6.1> Laminate

FIG. 12 is a cross-sectional view schematically illustrating a laminate according to a sixth embodiment of the present invention.

A laminate 10F1 illustrated in FIG. 12 is the same as the laminate 10E3 except that the laminate 10F1 further includes a printed layer 4 placed between the substrate layer 1 and the first adhesive agent layer 3A, a protective layer 6 provided on the surface of the substrate layer 1, and a coating layer 7 placed between the inorganic compound layer 5 and the second adhesive agent layer 3B. As the printed layer 4, those described in the first and third embodiments can be used. As the protective layer 6 and the coating layer 7, those described in the second embodiment can be used.

### <6.2> Effects

In the laminate 10F1 described above, the probe descendent temperature of the substrate layer 1 is within the above range. The laminate 10F1 includes the protective layer 6. Therefore, the laminate 10F1 can achieve further excellent heat resistance, particularly better heat-sealing suitability. Therefore, when the above-described configuration is adopted for the laminate 10F1, the temperature range of the heat-sealing performed for bag production is widened, and the deterioration in productivity is further less likely to occur.

In addition, the laminate 10F1 includes the intermediate layer 8 in which the probe descendent temperature is within the above range. The intermediate layer 8 increases the strength of the laminate 10F1, particularly the drop resistance. Therefore, the laminate 10F1 is excellent in strength, particularly drop resistance.

Furthermore, the substrate layer 1 is excellent in transparency when the haze is small. Therefore, in this case, an image such as a pattern or text displayed on the printed layer 4 can be visually recognized with good visibility.

Then, the ratio of polyethylene in the laminate 10F1 is 90 mass% or more. Therefore, the laminate 10F1 is also excellent in recyclability.

### <6.3> Modification

The laminate 10F1 can be modified in various ways.

For example, the inorganic compound layer 5 may be provided on the front surface of the intermediate layer 8 instead of being provided on the back surface of the intermediate layer 8. In this case, the coating layer 7 is provided so as to coat the inorganic compound layer 5.

One of the inorganic compound layer 5 and the coating layer 7 may be omitted. When high barrier properties are not required, both the inorganic compound layer 5 and the coating layer 7 may be omitted.

The printed layer 4 may be provided on the front surface of the substrate layer 1, on the front surface of the intermediate layer 8, or on the back surface of the intermediate layer 8. In any of the above cases, an image such as a pattern or text displayed on the printed layer 4 can be visually recognized with good visibility. Note that the printed layer 4 may be omitted.

### <7> Seventh embodiment

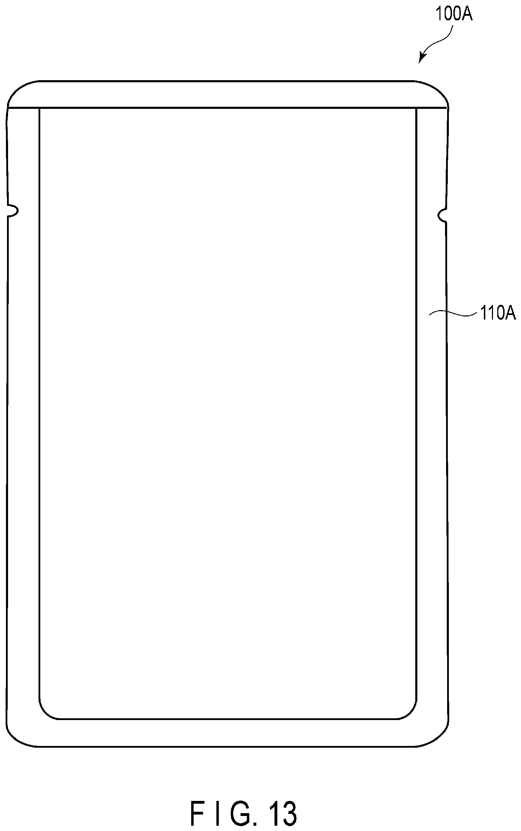

FIG. 13 is a view schematically illustrating a packaged article according to a seventh embodiment of the present invention.

A packaged article 100A illustrated in FIG. 13 includes a package 110A and contents contained therein.

The package 110A is a flat pouch. The package 110A includes a pair of main body films. Each of the main body films is any one of the laminates described in the first to sixth embodiments, or is cut out from the laminate. The main body films are stacked such that the sealant layers face each other, and peripheral edges thereof are heat-sealed to each other. In the package 110A, a notch is provided as an easily openable structure in the heat-sealed portion.

The content may be any of a liquid, a solid, and a mixture thereof. The content is, for example, a food or a drug.

### <8> Eighth embodiment

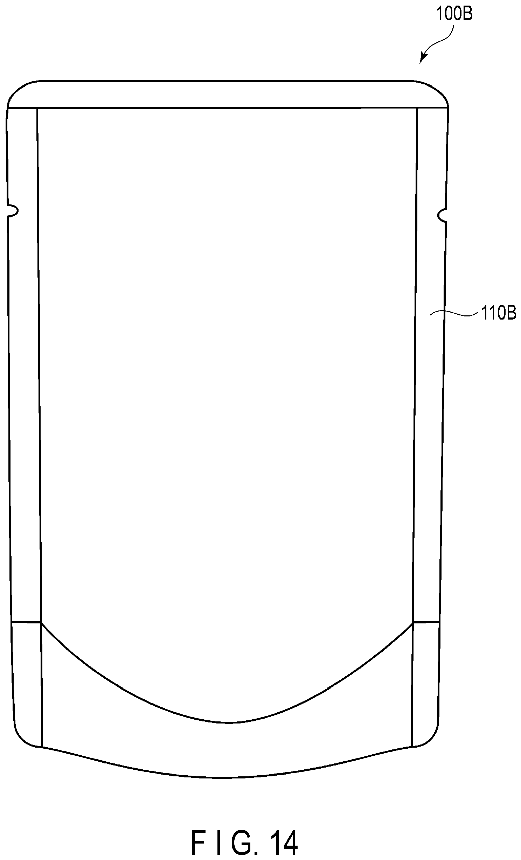

FIG. 14 is a view schematically illustrating a packaged article according to an eighth embodiment of the present invention.

A packaged article 100B illustrated in FIG. 14 includes a package 110B and contents contained therein. The contents are, for example, the same as those described for the packaged article 100A.

The package 110B is a standing pouch. The package 110B includes a pair of main body films and a bottom film. Each of these films is any one of the laminates described in the first to sixth embodiments, or is cut out from the laminate.

The pair of main body films are superimposed on each other such that the sealant layers face each other, and peripheral edges thereof are heat-sealed to each other except for one end and a region in the vicinity thereof. The bottom film is folded in two so as to be mountain folded when viewed from the sealant layer side, and is placed between the pair of main body films so that the mountain folded portion is oriented toward the other end of the main body film at the position of the one end. A portion of the bottom film excluding a central portion thereof is heat-sealed to the pair of main body films. In addition, outer surfaces of the bottom film are bonded to each other at positions on both sides of the bottom portion of the package 110B.

In the package 110B, a notch is provided as an easily openable structure at a portion where the main body films are heat-sealed to each other. The easy-to-open structure may be provided so that, when the packaged article 100B is opened, a corner portion above the packaged article can be used as an opening portion. Alternatively, the packaged article 100B may further include a spout member and a lid body described in a ninth embodiment.

### <9> Ninth embodiment

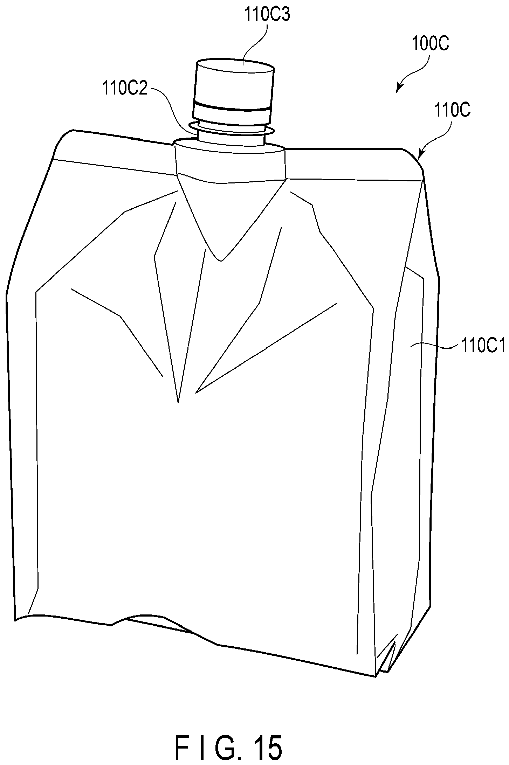

FIG. 15 is a view schematically illustrating a packaged article according to the ninth embodiment of the present invention.

A packaged article 100C illustrated in FIG. 15 includes a package 110C and contents contained therein. The contents are, for example, the same as those described for the packaged article 100A.

The package 110C is a gusset type pouch. The package 110C includes a container body 110C1, a spout member 110C2, and a lid body 110C3.

The container body 110C1 includes a pair of main body films and a pair of side films.

The pair of main body films is overlapped such that the sealant layers face each other and a part of the spout member 110C2 is placed therebetween at one end. Peripheral edge portions of these main body films are heat-sealed to the spout member 110C2 at the one end and are heat-sealed to each other in the vicinity thereof. Further, the peripheral edge portions of these main body films are heat-sealed to each other at opposite ends except for regions on both sides.

Each of the side films is folded in two so as to be mountain folded when viewed from the sealant layer side. These side films are placed between the pair of main body films so that the mountain folded portions on both sides of the main body films face each other. In each of the side films, a part of the peripheral edge portion is heat-sealed to one of the main body films, and the remaining portion of the peripheral edge portion is heat-sealed to the other of the main body films. In addition, outer surfaces of the side films are bonded to each other at respective positions of an upper portion and a lower portion of the package 110C.

The container body 110C1 may further include a bottom film.

As described above, the spout member 110C2 includes a portion to be placed between the main body films and heat-sealed. The spout member 110C2 further includes an opening portion protruding outward from the container body 110C1. The opening portion has a substantially cylindrical shape, and a male screw is provided on an outer surface of the side wall. The lid body 110C3 has a bottomed cylindrical shape. The lid body 110C3 is provided with a female screw on the inner surface of the side wall and is screwed with the opening portion of the spout member 110C2.

### Examples

The results of the tests carried out for the present invention are described below.

### (1) Test A

### (1.1) Production of laminate

### (1.1.1) Example 1A

The laminate 10A2 illustrated in FIG. 2 was produced by the following method.

First, a polyethylene film having a thickness of 25 um and a probe descendent temperature of 211°C was prepared as the substrate layer. Note that a method of measuring the probe descendent temperature used in the present example and the examples and comparative examples described below will be described later.

Next, one surface of the substrate layer was subjected to a corona treatment. Subsequently, a silicon oxide (SiOₓ) evaporated film was formed as the inorganic compound layer on the corona-treated surface of the substrate layer using an electron beam heating vacuum deposition apparatus so as to have a thickness of 40 nm. Thereafter, a pattern was printed on the inorganic compound layer using a gravure ink to form a printed layer.

Next, an adhesive for dry lamination (urethane-based adhesive) was applied to the surface of the substrate layer on which the printed layer was formed. Then, a linear low-density polyethylene resin (LLDPE) film (thickness of 60 µm) as the sealant layer was bonded to the substrate layer with the adhesive agent layer interposed therebetween.

The laminate was prepared as described above.

### (1.1.2) Example 2A

The laminate 10A1 illustrated in FIG. 1 was produced by the same method as in Example 1A except that the inorganic compound layer was not provided.

### (1.1.3) Example 3A

The laminate 10A2 illustrated in FIG. 2 was produced by the same method as in Example 1A except that a polyamine-based gas barrier adhesive was used instead of using a dry lamination adhesive (urethane-based adhesive) as the adhesive.

### (1.1.4) Example 4A

The laminate 10A2 illustrated in FIG. 2 was produced by the same method as in Example 1A except that a polyethylene film having a thickness of 25 µm and a probe descendent temperature of 205°C was used as the substrate layer instead of using a polyethylene film having a thickness of 25 um and a probe descendent temperature of 211°C.

### (1.1.5) Example 5A

The laminate 10A2 illustrated in FIG. 2 was produced by the same method as in Example 1A except that a polyethylene film having a thickness of 25 µm and a probe descendent temperature of 203°C was used as the substrate layer instead of using a polyethylene film having a thickness of 25 µm and a probe descendent temperature of 211°C.

### (1.1.6) Example 6A

The laminate 10A2 illustrated in FIG. 2 was produced by the same method as in Example 1A except that a polyethylene film having a thickness of 20 um and a probe descendent temperature of 211°C was used as the substrate layer instead of using a polyethylene film having a thickness of 25 um and a probe descendent temperature of 211°C.

### (1.1.7) Example 7A

The laminate 10A2 illustrated in FIG. 2 was produced by the same method as in Example 1A except that a polyethylene film having a thickness of 30 um and a probe descendent temperature of 211°C was used as the substrate layer instead of using a polyethylene film having a thickness of 25 µm and a probe descendent temperature of 211°C.

### (1.1.8) Example 8A

The laminate 10A2 illustrated in FIG. 2 was produced by the same method as in Example 1A except that a linear low-density polyethylene resin (LLDPE) film having a thickness of 40 um was used as the sealant layer in place of the 60 pm-thick linear low-density polyethylene resin (LLDPE) film.

### (1.1.9) Example 9A

The laminate 10A2 illustrated in FIG. 2 was produced by the same method as in Example 1A except that a linear low density polyethylene resin (LLDPE) film having a thickness of 120 µm was used as the sealant layer in place of the 60 µm-thick linear low-density polyethylene resin (LLDPE) film.

### (1.1.10) Example 10 A

The laminate 10A1 illustrated in FIG. 1 was produced by the same method as in Example 2A except that a polyamine-based gas barrier adhesive was used instead of using a dry lamination adhesive (urethane-based adhesive) as the adhesive.

### (1.1.11) Example 11 A

The laminate 10A1 illustrated in FIG. 1 was produced by the same method as in Example 2A except that a urethane-based gas barrier adhesive was used instead of using a dry lamination adhesive (urethane-based adhesive) as the adhesive.

### (1.1.12) Comparative Example 1A

A laminate was produced by the same method as in Example 1A except that a polyethylene film having a thickness of 40 um and a probe descendent temperature of 156°C was used as the substrate layer instead of using a polyethylene film having a thickness of 25 um and a probe descendent temperature of 211°C.

### (1.1.13) Comparative Example 2A

A laminate was produced by the same method as in Example 1A except that a polyethylene film having a thickness of 25 µm and a probe descendent temperature of 160°C was used as the substrate layer instead of using a polyethylene film having a thickness of 25 µm and a probe descendent temperature of 211°C.

### (1.1.14) Comparative example 3A

A laminate was produced by the same method as in Example 1A except that a polyethylene film having a thickness of 25 um and a probe descendent temperature of 164°C was used as the substrate layer instead of using a polyethylene film having a thickness of 25 µm and a probe descendent temperature of 211°C.

### (1.2) Measurement and evaluation method

The substrate layer used in the production of the laminate was subjected to in-plane measurement by the wide-angle X-ray diffraction method described above. Then, it was examined whether the diffraction pattern obtained by this measurement had a sharp diffraction peak corresponding to the (110) plane.

Further, the sealing property, heat resistance, print visibility, and gas barrier properties of the laminate were evaluated. A method for measuring the probe descendent temperature and a method for evaluating the sealing property, heat resistance, printing visibility, and gas barrier property will be described below.

### (1.2.1) Method of measuring probe descendent temperature

The probe descendent temperature was measured by the following method.

As an atomic force microscope, MPF-3D-SA (product name) manufactured by Oxford Instruments K.K. was used. As a nanothermal microscope equipped with this, Ztherm (product name) manufactured by Oxford Instruments K.K. was used. As the cantilever (probe), AN2-200 (product name) manufactured by Analysis Instruments Inc. was used.

In the measurement, first, the shape of the sample was measured for a field of view of 10 µm square in the AC mode. Next, the cantilever (probe) was separated from the sample by 5 to 10 um in the Z direction. In this state, the detrend correction function of the apparatus was activated under the conditions of a maximum applied voltage of 6 V and a heating rate of 0.5 V/s in the contact mode to correct the change in deflection of the cantilever (probe) due to the voltage application. Thereafter, the cantilever was brought into contact with the sample so that the change in deflection before and after contact between the cantilever and the sample was 0.2 V in the contact mode, and a voltage was applied to the cantilever under the conditions of a maximum applied voltage of 6 V and a heating rate of 0.5 V/s to heat the sample while maintaining the deflection at a constant value. The Z displacement at this time was recorded, and the measurement was stopped when the Z displacement turned from rising to lowering and then dropped by 50 nm from the change point. When the Z displacement did not decrease by 50 nm from the change point and reached the maximum applied voltage, the maximum applied voltage at the time of detrend correction and measurement was increased by 0.5 V, and the same operation as described above was performed again. The applied voltage at which the recorded Z displacement was maximized was converted into a temperature with reference to a standard curve described later. This measurement was performed at 10 points within a field of view of 10 um square, and the average value of the obtained temperatures was taken as the probe descendent temperature.

In order to obtain a standard curve for converting an applied voltage into a temperature, polycaprolactone (melting point: 60°C), low-density polyethylene (melting point: 112°C), polypropylene (melting point: 166°C), and polyethylene terephthalate (melting point: 255°C) were prepared as samples for constitution. Here, the melting point of the calibration sample is a melting peak temperature measured by a differential scanning calorimeter (DSC) under a condition of a temperature raising rate of 5 ° C/min.

The same measurement as described above was performed for each of these calibration samples. The maximum applied voltage at the time of detrend correction and measurement was 3.5 V for polycaprolactone, 5.5 V for low-density polyethylene, 6.5 V for polypropylene, and 7.8 V for polyethylene terephthalate.

Then, the relationship between the applied voltage at which the Z displacement was maximized in the measurement on the calibration sample and the melting point of the configuration sample was approximated by a cubic function by a least squares method to create a standard curve.

### (1.2.2) Method for evaluating sealing property

Samples obtained by cutting the laminates into a 10 cm square were folded in two so that the sealant layer was on the inner side, and heat-sealed using a heat seal tester. Specifically, first, the lower surface seal temperature was set to 100°C, the upper surface seal temperature was set to 120°C, and a pressure of 0.1 MPa was applied for one second. Then, the presence or absence of melting of the sealing surface was confirmed, and the region where the heat seal bar was applied on the upper surface of the sample folded in two was observed. In a case where the seal surface was not melted and the sample upper surface was not melted, the upper surface seal temperature was increased by 10°C while the lower surface seal temperature was fixed at 100°C until at least one of the seal surface and the sample upper surface was melted, and pressurization and observation similar to the above were performed. Then, the sealing property was evaluated according to the following criteria.
A: There was no melting on the upper surface of the sample, and there was no problem in appearance.
B: The upper surface of the sample was melted, and there was a problem in appearance.

### (1.2.3) Method for evaluating print visibility

The pattern displayed on the printed layer was visually observed from the substrate layer side, and the visibility was evaluated according to the following criteria.
A: The pattern displayed on the printed layer was clearly confirmed.
B: The pattern displayed on the printed layer was blurred and unclear.

### (1.2.4) Method for evaluating gas barrier property

The laminate was subjected to a boiling treatment, and then the oxygen transmission rate (OTR) at 30°C and a relative humidity of 70% was measured. For this measurement, an oxygen permeability measurement apparatus (OXTRAN-2/20 manufactured by MOCON, Inc.) was used. Then, the gas barrier property was evaluated with reference to the following criteria for the oxygen transmission rate.
A: OTR was less than 10 cc/m²·day·atm.
B: OTR was 10 cc/m²·day·atm or more.

### (1.2.5) Method for evaluating heat resistance

Samples obtained by cutting the laminates into a 10 cm square were folded in two so that the sealant layer was on the inner side. Next, the lower surface seal temperature of the heat seal tester was set to 30°C, the upper surface seal temperature was set to 170°C, and a pressure of 0.2 MPa was applied to the sample folded in two for one second. Then, the presence or absence of melting of the sealing surface was confirmed, and whether or not the region of the upper surface of the sample folded in two, to which the heat seal bar was applied, adhered to the heat seal bar was observed, and the heat resistance was evaluated according to the following criteria.
A: The upper surface of the sample did not adhere to the heat seal bar.
B: The upper surface of the sample was adhered to the heat seal bar.

### (1.3) Results

The results of the above measurement and evaluation are summarized in the following Table 1A and Table 1B.

**Table 1A**

| | | | Ex.1A | Ex.2A | Ex.3A | Ex.4A | Ex.5A | Ex.6A | Ex.7A |
|---|---|---|---|---|---|---|---|---|---|
| Structure /Material | Substrate layer | Material | PE | PE | PE | PE | PE | PE | PE |
| | | Thickness (µm) | 25 | 25 | 25 | 25 | 25 | 20 | 30 |
| | | Probe descendent temperature (°C) | 211 | 211 | 211 | 205 | 203 | 211 | 211 |
| | | In-plane diffraction peak | Present | Present | Present | Present | Absent | Present | Present |
| | | Haze | 1.6 | 1.6 | 1.6 | 4.1 | 5.9 | 1.4 | 2 |
| | Printed layer | Presence or absence | Present | Present | Present | Present | Present | Present | Present |
| | Adhesive agent layer | Material | Urethane-based adhesive | Urethane-based adhesive | Polyamine-based gas barrier adhesive | Urethane-based adhesive | Urethane-based adhesive | Urethane-based adhesive | Urethane-based adhesive |
| | Inorganic compound layer | Material | Silicon oxide | - | Silicon oxide | Silicon oxide | Silicon oxide | Silicon oxide | Silicon oxide |
| | | Thickness (nm) | 40 | - | 40 | 40 | 40 | 40 | 40 |
| | Sealant layer | Material | LLDPE | LLDPE | LLDPE | LLDPE | LLDPE | LLDPE | LLDPE |
| | | Thickness (µm) | 60 | 60 | 60 | 60 | 60 | 60 | 60 |
| Evaluation / Result | | Sealing property | A | A | A | A | A | A | A |
| | | Heat resistance @170°C | A | A | A | A | A | A | A |
| | | Visibility | A | A | A | A | A | A | A |
| | | Gas barrier property | A | B | A | A | A | A | A |

**Table 1B**

| | | | Ex.8A | Ex.9A | Ex.10A | Ex.11A | Comp.Ex.1A | Comp.Ex.2A | Comp.Ex.3A |
|---|---|---|---|---|---|---|---|---|---|
| Structure /Material | Substrate layer | Material | PE | PE | PE | PE | PE | PE | PE |
| | | Thickness (µm) | 25 | 25 | 25 | 25 | 40 | 25 | 25 |
| | | Probe descendent temperature (°C) | 211 | 211 | 211 | 211 | 156 | 160 | 164 |
| | | In-plane diffraction peak | Present | Present | Present | Present | Absent | Absent | Absent |
| | | Haze | 1.6 | 1.6 | 1.6 | 1.6 | 52.9 | 21.5 | 18.9 |
| | Printed layer | Presence or absence | Present | Present | Present | Present | Present | Present | Present |
| | Adhesive agent layer | Material | Urethane-based adhesive | Urethane-based adhesive | Polyamine-based gas barrier adhesive | Urethane-based gas barrier adhesive | Urethane-based adhesive | Urethane-based adhesive | Urethane-based adhesive |
| | Inorganic compound layer | Material | Silicon oxide | Silicon oxide | - | - | Silicon oxide | Silicon oxide | Silicon oxide |
| | | Thickness (nm) | 40 | 40 | - | - | 40 | 40 | 40 |
| | Sealant layer | Material | LLDPE | LLDPE | LLDPE | LLDPE | LLDPE | LLDPE | LLDPE |
| | | Thickness (µm) | 40 | 120 | 60 | 60 | 60 | 60 | 60 |
| Evaluation / Result | | Sealing property | A | A | A | A | B | B | B |
| | | Heat resistance @170°C | A | A | A | A | B | B | B |
| | | Visibility | A | A | A | A | B | B | B |
| | | Gas barrier property | A | A | B | B | A | A | A |

As shown in Tables 1A and 1B, the laminate in which the probe descendent temperature of the substrate layer was 180°C or higher had good sealing property, heat resistance, and print visibility. On the other hand, the laminate in which the probe descendent temperature of the substrate layer was lower than 180°C had insufficient sealing property, heat resistance, and visibility.

### (2) Test B

### (2.1) Production of laminate

### (2.1.1) Example 1B

The laminate 10B2 illustrated in FIG. 4 was produced by the following method.

First, a polyethylene film having a thickness of 25 µm and a probe descendent temperature of 211°C was prepared as the substrate layer. As will be described later, in the present example and examples and comparative examples described below, the probe descendent temperature was measured by the method described in (1.2.1).

Next, one surface of the substrate layer was subjected to a corona treatment. Subsequently, a polyamideimide resin was applied to the corona-treated surface of the substrate layer to form a protective layer having a thickness of 0.5 µm. The nonvolatile content concentration in the coating liquid used for formation of the protective layer was 5 mass%.

Next, the other surface of the substrate layer was subjected to a corona treatment. Next, a silicon oxide (SiOₓ) evaporated film was formed as the inorganic compound layer on the corona-treated surface of the substrate layer using an electron beam heating vacuum deposition apparatus so as to have a thickness of 40 nm. Subsequently, a coating liquid for forming a coating layer was applied to the inorganic compound layer to form a coating layer composed of an organic-inorganic mixture and having a thickness of 0.3 µm. Thereafter, a pattern was printed on the inorganic compound layer using a gravure ink to form a printed layer.

Next, an adhesive for dry lamination (urethane-based adhesive) was applied to the surface of the substrate layer on which the printed layer was formed. Then, a linear low-density polyethylene resin (LLDPE) film (thickness of 60 µm) as the sealant layer was bonded to the substrate layer with the adhesive agent layer interposed therebetween.

The laminate was prepared as described above.

### (2.1.2) Example 2B

The laminate 10B2 illustrated in FIG. 4 was produced by the same method as in Example 1B except that the thickness of the protective layer was 1 µm.

### (2.1.3) Example 3B

The laminate was produced by the same method as in Example 1B, except that the protective layer was not provided.

### (2.1.4) Example 4B

The laminate 10B2 illustrated in FIG. 4 was produced by the same method as in Example 1B except that a protective layer made of an organic-inorganic mixture and having a thickness of 0.5 µm was formed instead of forming a protective layer having a thickness of 0.5 µm by applying a polyamideimide resin. The protective layer composed of an organic-inorganic mixture was formed by applying the coating liquid for forming the coating layer.

### (2.1.5) Example 5B

The laminate 10B2 illustrated in FIG. 4 was produced by the same method as in Example 1B except that a protective layer made of a urethane-based resin and having a thickness of 0.5 µm was formed instead of forming a protective layer having a thickness of 0.5 µm by applying a polyamideimide resin.

### (2.1.6) Example 6B

The laminate 10B2 illustrated in FIG. 4 was produced by the same method as in Example 1B except that a protective layer made of a urethane-based resin and having a thickness of 1 µm was formed instead of forming a protective layer having a thickness of 0.5 µm by applying a polyamideimide resin.

### (2.1.7) Example 7B

The laminate 10B2 illustrated in FIG. 4 was produced by the same method as in Example 1B except that a protective layer made of an ethylene-vinyl alcohol copolymer (EVOH) and having a thickness of 1 µm was formed instead of forming a protective layer having a thickness of 0.5 µm by applying a polyamideimide resin.

### (2.1.8) Example 8B

The laminate 10B2 illustrated in FIG. 4 was produced by the same method as in Example 1B except that a protective layer made of an acrylic resin and having a thickness of 1 µm was formed instead of forming a protective layer having a thickness of 0.5 um by applying a polyamideimide resin.

### (2.1.9) Comparative Example 1B

A laminate was produced by the same method as in Example 1B, except that the protective layer was not provided, and a polyethylene film having a thickness of 25 um and a probe descendent temperature of 152°C was used as the substrate layer, instead of using a polyethylene film having a thickness of 25 µm and a probe descendent temperature of 211 °C.

### (2.2) Measurement and evaluation method

The substrate layer used in the production of the laminate was subjected to in-plane measurement by the wide-angle X-ray diffraction method described above. Then, it was examined whether the diffraction pattern obtained by this measurement had a sharp diffraction peak corresponding to the (110) plane.

Further, the sealing property, heat resistance, and print visibility of the laminate were evaluated. A method of measuring the probe descendent temperature and a method of evaluating the sealing property, heat resistance, and print visibility will be described below.

### (2.2.1) Method of measuring probe descendent temperature

The probe descendent temperature was measured by the method described in (1.2.1).

### (2.2.2) Method for evaluating sealing property

Samples obtained by cutting the laminates into a 10 cm square were folded in two so that the sealant layer was on the inner side, and heat-sealed using a heat seal tester. Specifically, first, the lower surface seal temperature was set to 100°C, the upper surface seal temperature was set to 120°C, and a pressure of 0.1 MPa was applied for one second. Then, the presence or absence of melting of the sealing surface was confirmed, and the region where the heat seal bar was applied on the upper surface of the sample folded in two was observed. In a case where melting or an appearance defect did not occur on the upper surface of the sample, the upper surface seal temperature was increased by 10°C while the lower surface seal temperature was fixed at 100°C until melting or an appearance defect occurred on the upper surface of the sample, and pressurization and observation similar to the above were performed. Then, the sealing property was evaluated according to the following criteria.
A: Melting or appearance defect did not occur on the upper surface of the sample at the time of melting or the sealing surface.
B: Melting or appearance defect occurred on the upper surface of the sample at the time of melting or before melting of the seal surface.

### (2.2.3) Method for evaluating print visibility

The print visibility was evaluated by the method described in (1.2.3).

### (2.2.4) Method for evaluating heat resistance

Samples obtained by cutting the laminates into a 10 cm square were folded in two so that the sealant layer was on the inner side. Next, the lower surface seal temperature of the heat seal tester was set to 30°C, the upper surface seal temperature was set to 170°C, and a pressure of 0.2 MPa was applied to the sample folded in two for one second. Then, the presence or absence of melting of the sealing surface was confirmed, and whether or not the region of the upper surface of the sample folded in two, to which the heat seal bar was applied, adhered to the heat seal bar was observed, and the heat resistance was evaluated according to the following criteria.
A: The upper surface of the sample did not adhere to the heat seal bar.
B: The upper surface of the sample was adhered to the heat seal bar.

Further, for the laminate having a protective layer, heat resistance was further evaluated in the same manner as described above except that the upper surface seal temperature was set to 190°C.

### (2.3) Results

The results of the above measurement and evaluation are summarized in Table 2 below.

**Table 2**

| | | | Ex.1B | Ex.2B | Ex.3B | Ex.4B | Ex.5B |
|---|---|---|---|---|---|---|---|
| Structure /Material | Protective layer | Material | Polyamideimide resin | Polyamideimide resin | - | Organic-inorganic composite | Urethane-based resin |
| | | Thickness (µm) | 0.5 | 1 | - | 0.5 | 0.5 |
| | Substrate layer | Material | PE | PE | PE | PE | PE |
| | | Thickness (µm) | 25 | 25 | 25 | 25 | 25 |
| | | Probe descendent temperature (°C) | 211 | 211 | 211 | 211 | 211 |
| | | In-plane diffraction peak | Present | Present | Present | Present | Present |
| | Printed layer | Presence or absence | Present | Present | Present | Present | Present |
| | Adhesive agent layer | Material | Urethane-based adhes ive | Urethane-based adhesive | Urethane-based adhesive | Urethane-based adhesive | Urethane-based adhesive |
| | Inorganic compound layer | Material | Silicon oxide | Silicon oxide | Silicon oxide | Silicon oxide | Silicon oxide |
| | | Thickness (nm) | 40 | 40 | 40 | 40 | 40 |
| | Coating layer | Material | Organic-inorganic composite | Organic-inorganic composite | Organic-inorganic composite | Organic-inorganic composite | Organic-inorganic composite |
| | | Thickness (µm) | 0.3 | 0.3 | 0.3 | 0.3 | 0.3 |
| | Sealant layer | Material | LLDPE | LLDPE | LLDPE | LLDPE | LLDPE |
| | | Thickness (µm) | 60 | 60 | 60 | 60 | 60 |
| Evaluation / Result | | Sealing property | A | A | B | A | A |
| | | Heat resistance @170°C | A | A | A | A | A |
| | | Heat resistance @190°C | A | A | - | A | A |
| | | Visibility | A | A | A | A | A |

**Table 2**

| | | | Ex.6B | Ex.7B | Ex.8B | Comp.Ex.1B |
|---|---|---|---|---|---|---|
| Structure /Material | Protective layer | Material | Urethane-based resin | EVOH | Acrylic resin | - |
| | | Thickness (µm) | 1 | 1 | 1 | - |
| | Substrate layer | Material | PE | PE | PE | PE |
| | | Thickness (µm) | 25 | 25 | 25 | 25 |
| | | Probe descendent temperature (°C) | 211 | 211 | 211 | 160 |
| | | In-plane diffraction peak | Present | Present | Present | Absent |
| | Printed layer | Presence or absence | Present | Present | Present | Present |
| | Adhesive agent layer | Material | Urethane-based adhesive | Urethane-based adhesive | Urethane-based adhesive | Urethane-based adhesive |
| | Inorganic compound layer | Material | Silicon oxide | Silicon oxide | Silicon oxide | Silicon oxide |
| | | Thickness (nm) | 40 | 40 | 40 | 40 |
| | Coating layer | Material | Organic-inorganic composite | Organic-inorganic composite | Organic-inorganic composite | Organic-inorganic composite |
| | | Thickness (µm) | 0.3 | 0.3 | 0.3 | 0.3 |
| | Sealant layer | Material | LLDPE | LLDPE | LLDPE | LLDPE |
| | | Thickness (µm) | 60 | 60 | 60 | 60 |
| Evaluation / Result | | Sealing property | A | A | A | B |
| | | Heat resistance @170°C | A | A | A | B |
| | | Heat resistance @190°C | A | A | A | B |
| | | Visibility | A. | A | A | B |

As shown in Table 2, the laminate in which the probe descendent temperature of the substrate layer was 180°C or higher was excellent in heat resistance and print viability. The laminate in which the probe descendent temperature of the substrate layer was 180°C or higher and the protective layer was provided was also excellent in sealing property. On the other hand, the laminate in which the substrate layer had a probe descendent temperature of less than 180°C and no protective layer is provided had insufficient sealing property, heat resistance, and visibility.

### (3) Test C

### (3.1) Production of laminate

### (3.1.1) Example 1C

The laminate 10C2 illustrated in FIG. 6 was produced by the following method. Note that, in this example, a printed layer was provided between the substrate layer 1 and the first adhesive agent layer 3A.

First, a polyethylene film having a thickness of 25 µm and having one surface subjected to a corona treatment was prepared as the substrate layer. This polyethylene film had a density of 0.950 g/cm³ and a probe descendent temperature of 211°C. As will be described later, in the present example and examples and comparative examples described below, the probe descendent temperature was measured by the method described in (1.2.1). A pattern was printed on the corona-treated surface of the substrate layer using a gravure ink to form a printed layer.

Further, as an intermediate layer, a polyethylene film having a thickness of 25 µm and having one surface subjected to a corona treatment was prepared. This polyethylene film had a density of 0.950 g/cm³ and a probe descendent temperature of 211°C. A silicon oxide (SiOₓ) evaporated film was formed as the inorganic compound layer on the corona-treated surface of the intermediate layer by using an electron beam heating vacuum deposition apparatus so as to have a thickness of 10 nm.

Next, an adhesive for dry lamination (urethane-based adhesive) was applied to the surface of the substrate layer on which the printed layer was formed and the back surface of the surface of the intermediate layer on which the inorganic compound layer was formed, and the coating film was dried to form first and second adhesive agent layers each having a thickness of 3 µm. Then, the substrate layer and the intermediate layer were bonded to each other with the first adhesive agent layer interposed therebetween such that the printed layer and the inorganic compound layer faced each other, and the intermediate layer and a linear low-density polyethylene resin (LLDPE) film (thickness: 60 µm) as a sealant layer were bonded to each other with the second adhesive agent layer placed therebetween.

The laminate was prepared as described above.

### (3.1.2) Example 2C

The laminate 10C1 illustrated in FIG. 5 was produced by the same method as in Example 1C except that the inorganic compound layer was not provided. Also in this example, similarly to Example 1C, a printed layer was provided between the substrate layer 1 and the first adhesive agent layer 3A.

### (3.1.3) Example 3C

The laminate 10C2 illustrated in FIG. 6 was produced by the same method as in Example 1C except that a polyamine-based gas barrier adhesive was used instead of using a dry lamination adhesive (urethane-based adhesive) as the adhesive. Also in this example, similarly to Example 1C, a printed layer was provided between the substrate layer 1 and the first adhesive agent layer 3A.

### (3.1.4) Example 4C

The laminate 10C2 illustrated in FIG. 6 was produced as the substrate layer by the same method as in Example 1C except that the following polyethylene film was used instead of using the above polyethylene film having a probe descendent temperature of 211°C. In other words, in this example, a polyethylene film having a thickness of 25 µm, a density of 0.950 g/cm³, a probe descendent temperature of 205°C, and one surface subjected to a corona treatment was used as the substrate layer. Also in this example, similarly to Example 1C, a printed layer was provided between the substrate layer 1 and the first adhesive agent layer 3A.

### (3.1.5) Example 5C

The laminate 10C2 illustrated in FIG. 6 was produced by the same method as in Example 1C except for the following matters. In other words, in this example, a polyethylene film having a thickness of 25 µm, a density of 0.950 g/cm³, a probe descendent temperature of 203°C, and one surface subjected to a corona treatment was used as the substrate layer instead of using the polyethylene film having a probe descendent temperature of 211°C. Further, in this example, a polyethylene film having a thickness of 25 µm, a density of 0.950 g/cm³, a probe descendent temperature of 205°C, and one surface subjected to a corona treatment was used as the intermediate layer instead of using the polyethylene film having a probe descendent temperature of 211°C. Also in this example, similarly to Example 1C, a printed layer was provided between the substrate layer 1 and the first adhesive agent layer 3A.

### (3.1.6) Example 6C

The laminate 10E2 illustrated in FIG. 10 was produced by the same method as in Example 1C except for the following matters. In other words, in this example, a polyethylene film having a thickness of 40 µm, a density of 0.949 g/cm³, a probe descendent temperature of 156°C, and one surface subjected to a corona treatment was used as the intermediate layer instead of using the polyethylene film having a probe descendent temperature of 211°C. Also in this example, similarly to Example 1C, a printed layer was provided between the substrate layer 1 and the first adhesive agent layer 3A.

### (3.1.7) Comparative Example 1C

A laminate was produced in the same manner as in Example 1C, except that a polyethylene film having a thickness of 40 µm, a density of 0.949 g/cm³, a probe descendent temperature of 156°C, and one surface subjected to a corona treatment was used as the substrate layer, instead of the polyethylene film having a probe descendent temperature of 211°C.

### (3.1.8) Comparative Example 2C

A laminate was produced in the same manner as in Example 1C, except for the following matters. In other words, in this example, a polyethylene film having a thickness of 40 µm, a density of 0.949 g/cm³, a probe descendent temperature of 156°C, and one surface subjected to a corona treatment was used as the substrate layer instead of using the polyethylene film having a probe descendent temperature of 211°C. Further, in this example, a polyethylene film having a thickness of 40 µm, a density of 0.949 g/cm³, a probe descendent temperature of 156°C, and one surface subjected to a corona treatment was used as the intermediate layer instead of using the polyethylene film having a probe descendent temperature of 211°C.

### (3.2) Measurement and evaluation method

The substrate layer and the intermediate layer used in the production of the laminate were subjected to in-plane measurement by the wide-angle X-ray diffraction method described above. Then, it was examined whether the diffraction pattern obtained by this measurement had a sharp diffraction peak corresponding to the (110) plane.

Further, the sealing property, heat resistance, print visibility, and gas barrier properties of the laminate were evaluated. The puncture resistance of the laminate was measured. A method for measuring the probe descendent temperature and the puncture resistance and a method for evaluating the sealing property, the heat resistance, the print visibility, and the gas barrier property will be described below.

### (3.2.1) Method of measuring probe descendent temperature

The probe descendent temperature was measured by the method described in (1.2.1).

### (3.2.2) Method for evaluating sealing property

Samples obtained by cutting the laminates into a 10 cm square were folded in two so that the sealant layer was on the inner side, and heat-sealed using a heat seal tester. Specifically, a temperature of 140°C and a pressure of 0.1 MPa were applied to the sample folded in two for one second. Then, a region of the surface of the sample to which the heat seal bar was applied was observed, and the sealing property was evaluated according to the following criteria.
A: There was no melting on the surface of the sample, and there was no problem in appearance.
B: The surface of the sample was melted, and there was a problem in appearance.

### (3.2.3) Method for evaluating print visibility

The print visibility was evaluated by the method described in (1.2.3).

### (3.2.4) Method for evaluating gas barrier property

The gas barrier property was evaluated by the method described in (1.2.4).

### (3.2.5) Method for measuring puncture resistance

A needle having a radius of 0.5 mm and a hemispherical tip is pressed against the laminate at a speed of 50 mm/min from the substrate layer side, and the maximum force until the needle penetrates is measured. This measurement was performed multiple times, and the arithmetic average of the maximum forces was obtained as the puncture resistance.

### (3.2.6) Method for evaluating heat resistance

The heat resistance was evaluated by the method described in (1.2.5).

### (3.3) Results

The results of the above measurement and evaluation are summarized in Table 3 below.

**Table 3**

| | | | Ex.1C | Ex.2C | Ex.3C | Ex.4C |
|---|---|---|---|---|---|---|
| Structure /Material | Substrate layer | Material | PE | PE | PE | PE |
| | | Density(g/cm³) | 0.950 | 0.950 | 0.950 | 0.950 |
| | | Thickness (µm) | 25 | 25 | 25 | 25 |
| | | Probe descendent temperature (°C) | 211 | 211 | 211 | 205 |
| | | In-plane diffraction peak | Present | Present | Present | Present |
| | | Haze | 1.6 | 1.6 | 1.6 | 4.1 |
| | Printed layer | Presence or absence | Present | Present | Present | Present |
| | 1st adhesive agent layer | Material | Urethane-based adhesive | Urethane-based adhesive | Polyamine-based gas barrier adhesive | Urethane-based adhesive |
| | | Thickness (µm) | 3 | 3 | 3 | 3 |
| | Intermediate layer | Material | PE | PE | PE | PE |
| | | Density (g/cm³) | 0.950 | 0.950 | 0.950 | 0.950 |
| | | Thickness (µm) | 25 | 25 | 25 | 25 |
| | | Probe descendent temperature (°C) | 211 | 211 | 211 | 211 |
| | | In-plane diffraction peak | Present | Present | Present | Present |
| | | Haze | 1.6 | 1.6 | 1.6 | 1.6 |
| | Inorganic compound layer | Material | Silicon oxide | - | Silicon oxide | Silicon oxide |
| | | Thickness (nm) | 10 | - | 10 | 10 |
| | 2nd adhesive agent layer | Material | Urethane-based adhesive | Urethane-based adhesive | Polyamine-based gas barrier adhesive | Urethane-based adhesive |
| | | Thickness (µm) | 3 | 3 | 3 | 3 |
| | Sealant layer | Material | LLDPE | LLDPE | LLDPE | LLDPE |
| | | Thickness (µm) | 60 | 60 | 60 | 60 |
| Evaluation / Result | | Sealing property | A | A | A | A |
| | | Heat resistance @170°C | A | A | A | A |
| | | Visibility | A | A | A | A |
| | | Gas barrier property | A | B | A | A |
| | | Puncture resistance (N) | 9.0 | 9.1 | 9.5 | 9.6 |

**Table 3**

| | | | Ex.5C | Ex.6C | Comp.Ex.1C | Comp.Ex.2C |
|---|---|---|---|---|---|---|
| Structure /Material | Substrate layer | Material | PE | PE | PE | PE |
| | | Density (g/cm³⁾ | 0.950 | 0.950 | 0.949 | 0.949 |
| | | Thickness (µm) | 25 | 25 | 40 | 40 |
| | | Probe descendent temperature (°C) | 203 | 211 | 156 | 156 |
| | | In-plane diffraction peak | Absent | Present | Absent | Absent |
| | | Haze | 5.9 | 1.6 | 52.9 | 52.9 |
| | Printed layer | Presence or absence | Present | Present | Present | Present |
| | 1 st adhesive agent layer | Material | Urethane-based adhesive | Urethane-based adhesive | Urethane-based adhesive | Urethane-based adhesive |
| | | Thickness (µm) | 3 | 3 | 3 | 3 |
| | Intermediate layer | Material | PE | PE | PE | PE |
| | | Density (g/cm³) | 0.950 | 0.949 | 0.950 | 0.949 |
| | | Thickness (µm) | 25 | 40 | 25 | 40 |
| | | Probe descendent temperature (°C) | 205 | 156 | 211 | 156 |
| | | In-plane diffraction peak | Present | Absent | Present | Absent |
| | | Haze | 4.1 | 52.9 | 1.6 | 52.9 |
| | Inorganic compound layer | Material | Silicon oxide | Silicon oxide | Silicon oxide | Silicon oxide |
| | | Thickness (nm) | 10 | 10 | 10 | 10 |
| | 2nd adhesive agent layer | Material | Urethane-based adhes ive | Urethane-based adhesive | Urethane-based adhesive | Urethane-based adhesive |
| | | Thickness (µm) | 3 | 3 | 3 | 3 |
| | Sealant layer | Material | LLDPE | LLDPE | LLDPE | LLDPE |
| | | Thickness (µm) | 60 | 60 | 60 | 60 |
| Evaluation / Result | | Sealing property | A | A | B | B |
| | | Heat resistance @170°C | A | A | B | B |
| | | Visibility | A | A | B | B |
| | | Gas barrier property | A | A | A | A |
| | | Puncture resistance (N) | 9.0 | 7.5 | 8.2 | 5.1 |

As shown in Table 3, the laminate in which the probe descendent temperature of the substrate layer was 180°C or higher has good sealing property, heat resistance, and print visibility. In addition, the laminate in which the probe descendent temperatures of both the substrate layer amd the intermediate layer were 180°C or higher showed high puncture resistance. On the other hand, the laminate in which the probe descendent temperature of the substrate layer was lower than 180°C had insufficient sealing property, heat resistance, and visibility. In addition, the laminate in which the probe descendent temperatures of both the substrate layer and the intermediate layer were lower than 180°C showed low puncture resistance.

### (4) Test D

### (4.1) Production of laminate

### (4.1.1) Example 1D

The laminate 10D1 illustrated in FIG. 8 was produced by the following method.

First, a polyethylene film having a thickness of 25 um and a probe descendent temperature of 211°C was prepared as the substrate layer. As will be described later, in the present example and examples and comparative examples described below, the probe descendent temperature was measured by the method described in (1.2.1).

Next, one surface of the substrate layer was subjected to a corona treatment. Subsequently, a polyamideimide resin was applied to the corona-treated surface of the substrate layer to form a protective layer having a thickness of 0.5 µm. The nonvolatile content concentration in the coating liquid used for formation of the protective layer was 5 mass%.

Next, the other surface of the substrate layer was subjected to a corona treatment. Next, a pattern was printed on the inorganic compound layer using a gravure ink on the corona-treated surface of the substrate layer to form a printed layer.

Further, as an intermediate layer, a polyethylene film having a thickness of 25 µm and a probe descendent temperature of 211°C was prepared. Next, one surface of the intermediate layer was subjected to a corona treatment. A silicon oxide (SiOₓ) evaporated film was formed as the inorganic compound layer on the corona-treated surface of the intermediate layer by using an electron beam heating vacuum deposition apparatus so as to have a thickness of 40 nm. Subsequently, a coating liquid for forming a coating layer was applied to the inorganic compound layer to form a coating layer composed of an organic-inorganic mixture and having a thickness of 0.3 µm.

Next, an adhesive for dry lamination (urethane-based adhesive) was applied to the surface of the substrate layer on which the printed layer was formed and the surface of the coating layer, and the coating film was dried to form first and second adhesive agent layers. The substrate layer and the intermediate layer were bonded to each other with the first adhesive agent layer interposed therebetween such that the printed layer and the intermediate layer faced each other, and the intermediate layer and the sealant layer were bonded to each other with the second adhesive agent layer interposed therebetween such that the coating layer and a linear low-density polyethylene resin (LLDPE) film (thickness: 60 µm) as a sealant layer faced each other.

The laminate was prepared as described above.

### (4.1.2) Example 2D

The laminate 10D1 illustrated in FIG. 8 was produced by the same method as in Example 1D except that the protective layer having a thickness of 1 µm was used.

### (4.1.3) Example 3D

The laminate 10D1 illustrated in FIG. 8 was produced by the same method as in Example 1D except that the protective layer having a thickness of 3 um was used.

### (4.1.4) Example 4D

A laminate was produced by the same method as in Example 1D except that the protective layer was not provided, and instead of using a polyethylene film having a thickness of 25 µm and a probe descendent temperature of 211°C as the intermediate layer, a polyethylene film having a thickness of 25 µm and a probe descendent temperature of 160°C was used.

### (4.1.5) Comparative Example 1D

A laminate was produced in the same manner as in Example 1D, except for the following matters. In other words, in this example, the protective layer was not provided. Further, in this example, instead of using a polyethylene film having a thickness of 25 µm and a probe descendent temperature of 211°C, a polyethylene film having a thickness of 25 µm and a probe descendent temperature of 160°C was used as the substrate layer. Further, in this example, instead of using a polyethylene film having a thickness of 25 µm and a probe descendent temperature of 211°C, a polyethylene film having a thickness of 25 µm and a probe descendent temperature of 160°C was used as the intermediate layer.

### (4.2) Measurement and evaluation method

The substrate layer and the intermediate layer used in the production of the laminate were subjected to in-plane measurement by the wide-angle X-ray diffraction method described above. Then, it was examined whether the diffraction pattern obtained by this measurement had a sharp diffraction peak corresponding to the (110) plane.

Further, the sealing property, heat resistance, print visibility, and recyclability of the laminate were evaluated. The puncture resistance of the laminate was measured. Methods for measuring the probe descendent temperature and the puncture resistance and methods for evaluating the sealing property, heat resistance, print visibility, and recyclability will be described below.

### (4.2.1) Method of measuring probe descendent temperature

The probe descendent temperature was measured by the method described in (1.2.1).

### (4.2.2) Method for evaluating sealing property

Samples obtained by cutting the laminates into a 10 cm square were folded in two so that the sealant layer was on the inner side, and heat-sealed using a heat seal tester. Specifically, first, the lower surface seal temperature was set to 100°C, the upper surface seal temperature was set to 120°C, and a pressure of 0.1 MPa was applied for one second. Then, the presence or absence of melting of the sealing surface was confirmed, and the region where the heat seal bar was applied on the upper surface of the sample folded in two was observed. In a case where melting or an appearance defect did not occur on the upper surface of the sample, the upper surface seal temperature was increased by 10°C while the lower surface seal temperature was fixed at 100°C until melting or an appearance defect occurred on the upper surface of the sample, and pressurization and observation similar to the above were performed. Then, the temperature at which melting or appearance defect occurred on the upper surface of the sample was recorded. In addition, the sealing property was evaluated according to the following criteria.
A: Melting or appearance defect did not occur on the upper surface of the sample at the time of melting or the sealing surface.
B: Melting or appearance defect occurred on the upper surface of the sample at the time of melting or before melting of the seal surface.

### (4.2.3) Method for evaluating print visibility

The print visibility was evaluated by the method described in (1.2.3).

### (4.2.4) Method for evaluating recyclability

The ratio of polyethylene to the total amount of the resin contained in the laminate was calculated. This ratio was referred to the following criteria to evaluate the recyclability.
A: The ratio of polyethylene was 90 mass% or more.
B: The ratio of polyethylene was less than 90 mass%.

### (4.2.5) Method for measuring puncture resistance

The puncture resistance was measured by the method described in (3.2.5).

### (4.2.6) Method for evaluating heat resistance

The heat resistance was evaluated by the method described in (2.2.4).

### (4.3) Results

The results of the above measurement and evaluation are summarized in Table 4 below.

**Table 4**

| | | | Ex.1D | Ex.2D | Ex.3D | Ex.4D | Comp.Ex.1D |
|---|---|---|---|---|---|---|---|
| Structure /Material | Protective layer | Material | Polyamideimide resin | Polyamideimide resin | Polyamideimide resin | - | - |
| | | Thickness (µm) | 0.5 | 1 | 3 | - | - |
| | Substrate layer | Material | PE | PE | PE | PE | PE |
| | | Thickness (µm) | 25 | 25 | 25 | 25 | 25 |
| | | Probe descendent temperature (°C) | 211 | 211 | 211 | 211 | 160 |
| | | In-plane diffraction peak | Present | Present | Present | Pres ent | Absent |
| | | Haze | 1.6 | 1.6 | 1.6 | 1.6 | 21.5 |
| | Printed layer | Presence or absence | Present | Present | Present | Pres ent | Present |
| | 1st adhesive agent layer | Material | Urethane-based adhes ive | Urethane-based adhesive | Urethane-based adhesive | Urethane-based adhesive | Urethane-based adhesive |
| | Intermediate layer | Material | PE | PE | PE | PE | PE |
| | | Thickness (µm) | 25 | 25 | 25 | 25 | 25 |
| | | Probe descendent temperature (°C) | 211 | 211 | 211 | 160 | 160 |
| | | In-plane diffraction peak | Pres ent | Present | Present | Absent | Absent |
| | | Haze | 1.6 | 1.6 | 1.6 | 21.5 | 21.5 |
| | Inorganic compound layer | Material | Silicon oxide | Silicon oxide | Silicon oxide | Silicon oxide | Silicon oxide |
| | | Thickness (nm) | 40 | 40 | 40 | 40 | 40 |
| | Coating layer | Material | Organic-inorganic composite | Organic-inorganic composite | Organic-inorganic composite | Organic-inorganic composite | Organic-inorganic composite |
| | | Thickness (µm) | 0.3 | 0.3 | 0.3 | 0.3 | 0.3 |
| | 2nd adhesive agent layer | Material | Urethane-based adhesive | Urethane-based adhesive | Urethane-based adhesive | Urethane-based adhesive | Urethane-based adhesive |
| | Sealant layer | Material | LLDPE | LLDPE | LLDPE | LLDPE | LLDPE |
| | | Thickness (µm) | 60 | 60 | 60 | 60 | 60 |
| Evaluation / Result | | Sealing property | A; 140°C | A; 150°C | A; 170°C | B; 130°C | B; 130°C |
| | | Heat resistance @170°C | A | A | A | A | B |
| | | Heat resistance @190°C | A | A | A | - | - |
| | | Visibility | A | A | A | A | B |
| | | Puncture resistance (N) | 9.6 | 9.6 | 9.6 | 7.5 | 5.0 |
| | | Recyclability | A | A | A | A | A |
| | | Polyethylene ratio (mass%) | 92 | 92 | 92 | 92 | 92 |

As shown in Table 4, the laminate in which the probe descendent temperature of the substrate layer was 180°C or higher was excellent in heat resistance and print visibility. The laminate in which the probe descendent temperature of the substrate layer was 180°C or higher and the protective layer was provided was also excellent in sealing property. In addition, the laminate in which the probe descendent temperatures of both the substrate layer and the intermediate layer were 180°C or higher and the protective layer was provided showed high puncture resistance. On the other hand, the laminate in which the probe descendent temperature of the substrate layer was lower than 180°C had insufficient heat resistance and visibility. In addition, the laminate in which the probe descendent temperatures of both the substrate layer and the intermediate layer were lower than 180°C showed low puncture resistance.

### (5) Test E

### (5.1) Production of laminate

### (5.1.1) Example 1E

The laminate 10E2 illustrated in FIG. 10 was produced by the following method. Note that, in this example, a printed layer was provided between the substrate layer 1 and the first adhesive agent layer 3A.

First, a polyethylene film having a thickness of 25 µm and having one surface subjected to a corona treatment was prepared as the substrate layer. This polyethylene film had a density of 0.950 g/cm³ and a probe descendent temperature of 211°C. As will be described later, in the present example and examples and comparative examples described below, the probe descendent temperature was measured by the method described in (1.2.1). A pattern was printed on the corona-treated surface of the substrate layer using a gravure ink to form a printed layer.

Further, as an intermediate layer, a polyethylene film having a thickness of 40 µm and having one surface subjected to a corona treatment was prepared. This polyethylene film had a density of 0.949 g/cm³ and a probe descendent temperature of 156°C. A silicon oxide (SiOₓ) evaporated film was formed as the inorganiccompound layer on the corona-treated surface of the intermediate layer by using an electron beam heating vacuum deposition apparatus so as to have a thickness of 10 nm.

Next, an adhesive for dry lamination (urethane-based adhesive) was applied to the surface of the substrate layer on which the printed layer was formed and the back surface of the surface of the intermediate layer on which the inorganic compound layer was formed, and the coating film was dried to form first and second adhesive agent layers each having a thickness of 3 µm. Then, the substrate layer and the intermediate layer were bonded to each other with the first adhesive agent layer interposed therebetween such that the printed layer and the inorganic compound layer faced each other, and the intermediate layer and a linear low-density polyethylene resin (LLDPE) film (thickness: 60 µm) as a sealant layer were bonded to each other with the second adhesive agent layer placed therebetween.

The laminate was prepared as described above.

### (5.1.2) Example 2E

The laminate 10E1 illustrated in FIG. 9 was produced by the same method as in Example 1E except that the inorganic compound layer was not provided. Also in this example, similarly to Example 1E, a printed layer was provided between the substrate layer 1 and the first adhesive agent layer 3A.

### (5.1.3) Example 3E

The laminate 10E2 illustrated in FIG. 10 was produced by the same method as in Example 1E except that a polyamine-based gas barrier adhesive was used instead of using a dry lamination adhesive (urethane-based adhesive) as the adhesive. Also in this example, similarly to Example 1E, a printed layer was provided between the substrate layer 1 and the first adhesive agent layer 3A.

### (5.1.4) Example 4E

The laminate 10E2 illustrated in FIG. 10 was produced by the same method as in Example 1E except for the following matters. In other words, in this example, a polyethylene film having a thickness of 25 µm, a density of 0.950 g/cm³, a probe descendent temperature of 205°C, and one surface subjected to a corona treatment was used as the substrate layer instead of using the polyethylene film having a probe descendent temperature of 211°C. Further, in this example, a polyethylene film having a thickness of 25 µm, a density of 0.950 g/cm³, a probe descendent temperature of 160°C, and one surface subjected to a corona treatment was used as the intermediate layer instead of using the polyethylene film having a probe descendent temperature of 156°C. Also in this example, similarly to Example 1E, a printed layer was provided between the substrate layer 1 and the first adhesive agent layer 3A.

### (5.1.5) Example 5E

The laminate 10E2 illustrated in FIG. 10 was produced as the substrate layer by the same method as in Example 1E except that the following polyethylene film was used instead of using the above polyethylene film having a probe descendent temperature of 211°C. In other words, in this example, a polyethylene film having a thickness of 25 µm, a density of 0.950 g/cm³, a probe descendent temperature of 203°C, and one surface subjected to a corona treatment was used as the substrate layer. Also in this example, similarly to Example 1E, a printed layer was provided between the substrate layer 1 and the first adhesive agent layer 3A.

### (5.1.6) Example 6E

The laminate 10C2 illustrated in FIG. 6 was produced by the same method as in Example 1E except for the following matters. In other words, in this example, a polyethylene film having a thickness of 25 µm, a density of 0.950 g/cm³, a probe descendent temperature of 211°C, and one surface subjected to a corona treatment was used as the intermediate layer instead of using the polyethylene film having a probe descendent temperature of 156°C. Also in this example, similarly to Example 1E, a printed layer was provided between the substrate layer 1 and the first adhesive agent layer 3A.

### (5.1.7) Comparative Example 1E

A laminate was produced in the same manner as in Example 1E, except that a polyethylene film having a thickness of 40 µm, a density of 0.949 g/cm³, a probe descendent temperature of 156°C, and one surface subjected to a corona treatment was used as the substrate layer, instead of the polyethylene film having a probe descendent temperature of 211°C.

### (5.1.8) Comparative Example 2E

A laminate was produced in the same manner as in Example 1E, except for the following matters. In other words, in this example, a polyethylene film having a thickness of 40 µm, a density of 0.949 g/cm³, a probe descendent temperature of 156°C, and one surface subjected to a corona treatment was used as the substrate layer instead of using the polyethylene film having a probe descendent temperature of 211°C. Further, in this example, a polyethylene film having a thickness of 25 µm, a density of 0.950 g/cm³, a probe descendent temperature of 205°C, and one surface subjected to a corona treatment was used as the intermediate layer instead of using the polyethylene film having a probe descendent temperature of 156°C.

### (5.2) Measurement and evaluation method

The substrate layer and the intermediate layer used in the production of the laminate were subjected to in-plane measurement by the wide-angle X-ray diffraction method described above. Then, it was examined whether the diffraction pattern obtained by this measurement had a sharp diffraction peak corresponding to the (110) plane.

Further, the sealing property, heat resistance, print visibility, and gas barrier properties of the laminate were evaluated. The drop resistance of the laminate was measured. A method for measuring the probe descendent temperature and the drop resistance and a method for evaluating the sealing property, the heat resistance, the print visibility, and the gas barrier property will be described below.

### (5.2.1) Method of measuring probe descendent temperature

The probe descendent temperature was measured by the method described in (1.2.1).

### (5.2.2) Method for evaluating sealing property

The sealing property was evaluated by the method described in (3.2.2).

### (5.2.3) Method for evaluating print visibility

The print visibility was evaluated by the method described in (1.2.3).

### (5.2.4) Method for evaluating gas barrier property

The gas barrier property was evaluated by the method described in (1.2.4).

### (5.2.5) Method for evaluating drop resistance

The laminate was cut into a predetermined size, and the peripheral edge portion was heat-sealed to produce ten bags. These bags were provided with openings for containing contents. The bags had a size of 100 mm × 150 mm. Next, each bag was filled with 200 mL of tap water, and the opening was heat-sealed to obtain a packaged article. Next, each packaged article was stored at 5°C for one day, and then dropped 50 times from a height of 1.5 m. The ratio of the number of packaged articles whose bags were broken within 50 times to the total number of packaged articles (10) was determined as the drop resistance.

### (5.2.6) Method for evaluating heat resistance

The heat resistance was evaluated by the method described in (1.2.5).

### (5.3) Results

The results of the above measurement and evaluation are summarized in Table 5 below.

**Table 5**

| | | | Ex.1E | Ex.2E | Ex.3E | Ex.4E |
|---|---|---|---|---|---|---|
| Structure /Material | Substrate layer | Material | PE | PE | PE | PE |
| | | Density (g/cm³⁾ | 0.950 | 0.950 | 0.950 | 0.950 |
| | | Thickness (µm) | 25 | 25 | 25 | 25 |
| | | Probe descendent temperature (°C) | 211 | 211 | 211 | 205 |
| | | In-plane diffraction peak | Present | Present | Present | Present |
| | | Haze | 1.6 | 1.6 | 1.6 | 4.1 |
| | Printed layer | Presence or absence | Present | Present | Present | Present |
| | 1 st adhesive agent layer | Material | Urethane-based adhesive | Urethane-based adhes ive | Polyamine-based gas barrier adhesive | Urethane-based adhesive |
| | | Thickness (µm) | 3 | 3 | 3 | 3 |
| | Intermediate layer | Material | PE | PE | PE | PE |
| | | Density (g/cm³⁾ | 0.949 | 0.949 | 0.949 | 0.950 |
| | | Thickness (µm) | 40 | 40 | 40 | 25 |
| | | Probe descendent temperature (°C) | 156 | 156 | 156 | 160 |
| | | In-plane diffraction peak | Absent | Absent | Absent | Absent |
| | Inorganic compound layer | Material | Silicon oxide | - | Silicon oxide | Silicon oxide |
| | | Thickness (nm) | 10 | - | 10 | 10 |
| | 2nd adhesive agent layer | Material | Urethane-based adhesive | Urethane-based adhesive | Polyamine-based gas barrier adhesive | Urethane-based adhesive |
| | | Thickness (µm) | 3 | 3 | 3 | 3 |
| | Sealant layer | Material | LLDPE | LLDPE | LLDPE | LLDPE |
| | | Thickness (µm) | 60 | 60 | 60 | 60 |
| Evaluation / Result | | Sealing property | A | A | A | A |
| | | Heat resistance @170°C | A | A | A | A |
| | | Visibility | A | A | A | A |
| | | Gas barrier property | A | B | A | A |
| | | Drop resistance | 0/10 | 0/10 | 0/10 | 0/10 |

**Table 5**

| | | | Ex.5E | Ex.6E | Comp.Ex.1E | Comp.Ex.2E |
|---|---|---|---|---|---|---|
| Structure /Material | Substrate layer | Material | PE | PE | PE | PE |
| | | Density (g/cm³) | 0.950 | 0.950 | 0.949 | 0.949 |
| | | Thickness (µm) | 25 | 25 | 40 | 40 |
| | | Probe descendent temperature (°C) | 203 | 211 | 156 | 156 |
| | | In-plane diffraction peak | Absent | Present | Absent | Absent |
| | | Haze | 5.9 | 1.6 | 52.9 | 52.9 |
| | Printed layer | Presence or absence | Present | Present | Present | |
| | 1 st adhesive agent layer | Material | Urethane-based adhesive | Urethane-based adhesive | Urethane-based adhesive | Urethane-based adhesive |
| | | Thickness (µm) | 3 | 3 | 3 | 3 |
| | Intermediate layer | Material | PE | PE | PE | PE |
| | | Density (g/cm³⁾ | 0.949 | 0.950 | 0.949 | 0.950 |
| | | Thickness (µm) | 40 | 25 | 40 | 25 |
| | | Probe descendent temperature (°C) | 156 | 211 | 156 | 205 |
| | | In-plane diffraction peak | Absent | Present | Absent | Present |
| | Inorganic compound layer | Material | Silicon oxide | Silicon oxide | Silicon oxide | Silicon oxide |
| | | Thickness (nm) | 10 | 10 | 10 | 10 |
| | 2nd adhesive agent layer | Material | Urethane-based adhesive | Urethane-based adhesive | Urethane-based adhesive | Urethane-based adhesive |
| | | Thickness (µm) | 3 | 3 | 3 | 3 |
| | Sealant layer | Material | LLDPE | LLDPE | LLDPE | LLDPE |
| | | Thickness (µm) | 60 | 60 | 60 | 60 |
| Evaluation / Result | | Sealing property | A | A | B | B |
| | | Heat resistance @170°C | A | A | B | B |
| | | Visibility | A | B | B | B |
| | | Gas barrier property | A | A | A | A |
| | | Drop resistance | 0/10 | 7/10 | 0/10 | 5/10 |

As shown in Table 5, the laminate in which the probe descendent temperature of the substrate layer was 180°C or higher has good sealing property, heat resistance, and print visibility. The laminate in which the probe descendent temperatures of the substrate layer was 180°C or higher and the probe descendent temperature of the intermediate layer was less than 180 °C was excellent in drop resistance. On the other hand, the laminate in which the probe descendent temperature of the substrate layer was lower than 180°C had insufficient sealing property, heat resistance, and visibility. In addition, the laminate in which the probe descendent temperature of the intermediate layer was 180°C or higher showed low drop resistance.

### (6) Test F

### (6.1) Production of laminate

### (6.1.1) Example IF

The laminate 10F1 illustrated in FIG. 12 was produced by the following method.

First, a polyethylene film having a thickness of 25 um and a probe descendent temperature of 211°C was prepared as the substrate layer. As will be described later, in the present example and examples and comparative examples described below, the probe descendent temperature was measured by the method described in (1.2.1).

Next, one surface of the substrate layer was subjected to a corona treatment. Subsequently, a polyamideimide resin was applied to the corona-treated surface of the substrate layer to form a protective layer having a thickness of 0.5 µm. The nonvolatile content concentration in the coating liquid used for formation of the protective layer was 5 mass%.

Next, the other surface of the substrate layer was subjected to a corona treatment. Next, a pattern was printed on the inorganic compound layer using a gravure ink on the corona-treated surface of the substrate layer to form a printed layer.

Further, as an intermediate layer, a polyethylene film having a thickness of 25 µm and a probe descendent temperature of 160°C was prepared. Next, one surface of the intermediate layer was subjected to a corona treatment. A silicon oxide (SiOₓ) evaporated film was formed as the inorganic compound layer on the corona-treated surface of the intermediate layer by using an electron beam heating vacuum deposition apparatus so as to have a thickness of 40 nm. Subsequently, a coating liquid for forming a coating layer was applied to the inorganic compound layer to form a coating layer composed of an organic-inorganic mixture and having a thickness of 0.3 µm.

Next, an adhesive for dry lamination (urethane-based adhesive) was applied to the surface of the substrate layer on which the printed layer was formed and the surface of the coating layer, and the coating film was dried to form first and second adhesive agent layers. The substrate layer and the intermediate layer were bonded to each other with the first adhesive agent layer interposed therebetween such that the printed layer and the intermediate layer faced each other, and the intermediate layer and the sealant layer were bonded to each other with the second adhesive agent layer interposed therebetween such that the coating layer and a linear low-density polyethylene resin (LLDPE) film (thickness: 60 um) as a sealant layer faced each other.

The laminate was prepared as described above.

### (6.1.2) Example 2F

The laminate 10F1 illustrated in FIG. 12 was produced by the same method as in Example IF except that the protective layer having a thickness of 1 µm was used.

### (6.1.3) Example 3F

The laminate 10F1 illustrated in FIG. 12 was produced by the same method as in Example IF except that the protective layer having a thickness of 3 µm was used.

### (6.1.4) Example 4F

A laminate was produced by the same method as in Example 1F except that the protective layer was not provided and a polyethylene film having a thickness of 25 µm and a probe descendent temperature of 211°C was used instead of using a polyethylene film having a thickness of 25 um and a probe descendent temperature of 160°C as the intermediate layer.

### (6.1.5) Comparative Example IF

A laminate was produced in the same manner as in Example 1F, except for the following matters. In other words, in this example, the protective layer was not provided. Further, in this example, instead of using a polyethylene film having a thickness of 25 µm and a probe descendent temperature of 211°C, a polyethylene film having a thickness of 25 µm and a probe descendent temperature of 160°C was used as the substrate layer. Further, in this example, a polyethylene film having a thickness of 25 µm and a probe descendent temperature of 211°C was used as the intermediate layer instead of using a polyethylene film having a thickness of 25 µm and a probe descendent temperature of 160°C.

### (6.2) Measurement and evaluation method

The substrate layer and the intermediate layer used in the production of the laminate were subjected to in-plane measurement by the wide-angle X-ray diffraction method described above. Then, it was examined whether the diffraction pattern obtained by this measurement had a sharp diffraction peak corresponding to the (110) plane.

Further, the sealing property, heat resistance, print visibility, and recyclability of the laminate were evaluated. The drop resistance of the laminate was measured. Methods for measuring the probe descendent temperature and the drop resistance and methods for evaluating the sealing property, heat resistance, print visibility, and recyclability will be described below.

### (6.2.1) Method of measuring probe descendent temperature

The probe descendent temperature was measured by the method described in (1.2.1).

### (6.2.2) Method for evaluating sealing property

The sealing property was evaluated by the method described in (4.2.2).

### (6.2.3) Method for evaluating print visibility

The print visibility was evaluated by the method described in (1.2.3).

### (6.2.4) Method for evaluating recyclability

The recyclability was evaluated by the method described in (4.2.4).

### (6.2.5) Method for evaluating drop resistance

The drop resistance was measured by the method described in (5.2.5).

### (6.2.6) Method for evaluating heat resistance

The heat resistance was evaluated by the method described in (2.2.4).

### (6.3) Results

The results of the above measurement and evaluation are summarized in Table 6 below.

**Table 6**

| | | | Ex.1F | Ex.2F | Ex.3F |
|---|---|---|---|---|---|
| Structure /Material | Protective layer | Material | Polyamideimide resin | Polyamideimide resin | Polyamideimide resin |
| | | Thickness (µm) | 0.5 | 1 | 3 |
| | Substrate layer | Material | PE | PE | PE |
| | | Thickness (µm) | 25 | 25 | 25 |
| | | Probe descendent temperature (°C) | 211 | 211 | 211 |
| | | In-plane diffraction peak | Present | Present | Present |
| | | Haze | 1.6 | 1.6 | 1.6 |
| | Printed layer | Presence or absence | Present | Present | Present |
| | 1 st adhesive agent layer | Material | Urethane-based adhesive | Urethane-based adhesive | Urethane-based adhesive |
| | Intermediate layer | Material | PE | PE | PE |
| | | Thickness (µm) | 25 | 25 | 25 |
| | | Probe descendent temperature (°C) | 160 | 160 | 160 |
| | | In-plane diffraction peak | Absent | Absent | Absent |
| | | Haze | 21.5 | 21.5 | 21.5 |
| | Inorganic compound layer | Material | Silicon oxide | Silicon oxide | Silicon oxide |
| | | Thickness (nm) | 40 | 40 | 40 |
| | Coating layer | Material | Organic-inorganic composite | Organic-inorganic composite | Organic-inorganic composite |
| | | Thickness (µm) | 0.3 | 0.3 | 0.3 |
| | 2nd adhesive agent layer | Material | Urethane-based adhesive | Urethane-based adhesive | Urethane-based adhesive |
| | Sealant layer | Material | LLDPE | LLDPE | LLDPE |
| | | Thickness (µm) | 60 | 60 | 60 |
| Evaluation / Result | | Sealing property | A; 140°C | A; 150°C | A; 170°C |
| | | Heat resistance @170°C | A | A | A |
| | | Heat resistance @190°C | A | A | A |
| | | Visibility | A | A | A |
| | | Drop resistance | 0/10 | 0/10 | 0/10 |
| | | Recyclability | A | A | A |
| | | Polyethylene ratio (mass%) | 92 | 92 | 92 |

**Table 6**

| | | | Ex.4F | Comp.Ex.1F |
|---|---|---|---|---|
| Structure /Material | Protective layer | Material | - | - |
| | | Thickness (µm) | - | - |
| | Substrate layer | Material | PE | PE |
| | | Thickness (µm) | 25 | 25 |
| | | Probe descendent temperature (°C) | 211 | 160 |
| | | In-plane diffraction peak | Present | Absent |
| | | Haze | 1.6 | 21.5 |
| | Printed layer | Presence or absence | Present | Present |
| | 1st adhesive agent layer | Material | Urethane-based adhesive | Urethane-based adhesive |
| | Intermediate layer | Material | PE | PE |
| | | Thickness (µm) | 25 | 25 |
| | | Probe descendent temperature (°C) | 211 | 211 |
| | | In-plane diffraction peak | Present | Present |
| | | Haze | 1.6 | 1.6 |
| | Inorganic compound layer | Material | Silicon oxide | Silicon oxide |
| | | Thickness (nm) | 40 | 40 |
| | Coating layer | Material | Organic-inorganic composite | Organic-inorganic composite |
| | | Thickness (µm) | 0.3 | 0.3 |
| | 2nd adhesive agent layer | Material | Urethane-based adhesive | Urethane-based adhesive |
| | Sealant layer | Material | LLDPE | LLDPE |
| | | Thickness (µm) | 60 | 60 |
| Evaluation / Result | | Sealing property | B; 130°C | B; 130°C |
| | | Heat resistance @170°C | A | B |
| | | Heat resistance @190°C | - | - |
| | | Visibility | A | B |
| | | Drop resistance | 8/10 | 7/10 |
| | | Recyclability | A | A |
| | | Polyethylene ratio (mass%) | 92 | 92 |

As shown in Table 6, the laminate in which the probe descendent temperature of the subtrate layer was 180°C or higher was ecellent in heat resistance and print visibility. The laminate in which the probe descendent temperature of the subtrate layer was 180°C or higher and the protective layer was provided was also excellent in sealing propert. Further, the laminate in wich the probe descendent temperature of the subtrate layer was 180°C or higher and the probe descendent temperatyre of the intermediate layer was less than 180°C was excellent in drop resistance. On the other hand, the laminate in which the probe descendent temperature of the substrate layer was lower than 180°C had insufficient sealing property, heat resistance, and visibility. In addition, the laminate in which the probe descendent temperature of the intermediate layer was 180°C or higher showed low drop resistance.

### Reference Signs List

- 1: Substrate layer
- 2: Sealant layer
- 3: Adhesive agent layer
- 3A: First adhesive agent layer
- 3B: Second adhesive agent layer
- 4: Printed layer
- 5: Inorganic compound layer
- 6: Protective layer
- 7: Coating layer
- 8: Intermediate layer

- 10A1: Laminate
- 10A2: Laminate
- 10B1: Laminate
- 10B2: Laminate
- 10C1: Laminate
- 10C2: Laminate
- 10C3: Laminate
- 10D1: Laminate
- 10E1: Laminate
- 10E2: Laminate
- 10E3: Laminate
- 10F1: Laminate
- 100A: Packaged article
- 100B: Packaged article
- 100C: Packaged article
- 110A: Package
- 110B: Package
- 110C: Package

- 110C1: Container body
- 110C2: Spout member
- 110C3: Lid body

## Claims

1. A laminate comprising a substrate layer, an adhesive agent layer, and a sealant layer in this order,
the substrate layer and the sealant layer comprising polyethylene, and
the substrate layer having a probe descendent temperature of 180°C or higher.

2. The laminate according to claim 1, wherein the probe descendent temperature of the substrate layer is 220°C or lower.

3. The laminate according to claim 1 or 2, further comprising an intermediate layer placed between the substrate layer and the sealant layer and comprising polyethylene.

4. The laminate according to claim 3, wherein the intermediate layer has a probe descendent temperature of 180°C or lower.

5. The laminate according to claim 4, wherein the probe descendent temperature of the intermediate layer is 140°C or higher.

6. The laminate according to claim 3, wherein the intermediate layer has a probe descendent temperature of 180°C or higher.

7. The laminate according to claim 6, wherein the probe descendent temperature of the intermediate layer is 220°C or lower.

8. The laminate according to any one of claims 1 to 7, further comprising a protective layer as an outermost layer, the protective layer facing the sealant layer with the substrate layer placed between the protective layer and the sealant layer.

9. The laminate according to claim 8, wherein the protective layer is made from a thermosetting resin.

10. The laminate according to any one of claims 1 to 9, wherein the substrate layer is a biaxially stretched film.

11. The laminate according to any one of claims 1 to 9, wherein the substrate layer is an uniaxially stretched film.

12. The laminate according to any one of claims 1 to 11, further comprising a gas barrier layer placed between the substrate layer and the sealant layer.

13. The laminate according to any one of claims 1 to 12, wherein the adhesive agent layer has a gas barrier property.

14. The laminate according to any one of claims 1 to 13, wherein the sealant layer is white.

15. The laminate according to any one of claims 1 to 14, wherein the laminate has a polyethylene content of 90 mass% or more.

16. A package comprising the laminate according to any one of claims 1 to 15.

17. The package according to claim 16, the package being a standing pouch.

18. A packaged article comprising the package according to claim 16 or 17 and a content contained in the package.
